# EUROPÄISCHE PATENTSCHRIFT

(11) **EP 3 282 126 B1**
(45) Veröffentlichungstag und Bekanntmachung des Hinweises auf die Patenterteilung: **21.08.2019**
(21) Anmeldenummer: 17183095.3
(22) Anmeldetag: 30.03.2016
(51) Int. Cl.: F04B 39/00, F04B 49/02, F04B 49/06, F25B 49/02, H02P 3/18, H02P 6/24, F25B 1/02, F25B 31/02, H02P 23/04

(54) **ELEKTRONISCHE STEUEREINRICHTUNG FÜR EINEN KÄLTEMITTELKOMPRESSOR**
ELECTRONIC CONTROL DEVICE FOR A REFRIGERANT COMPRESSOR
DISPOSITIF DE COMMANDE ÉLECTRONIQUE DE COMPRESSEUR FRIGORIFIQUE

(43) Veröffentlichungstag der Anmeldung: 14.02.2018
(62) Teilanmeldung aus: 16162990.2
(73) Patentinhaber: Nidec Global Appliance Germany GmbH, 24939 Flensburg (DE)
(72) Erfinder: PETERSEN, Per Tranekjer, 6300 Graasten (DK)
(74) Vertreter: KLIMENT & HENHAPEL

(56) Entgegenhaltungen:
- EP-A1- 2 759 788
- EP-A1- 2 789 936
- DE-U1-202012 013 046
- US-A- 6 051 952

## Beschreibung

### GEBIET DER ERFINDUNG

Die vorliegende Erfindung bezieht sich auf ein Steuerungssystem umfassend einen Kältemittelkompressor und eine elektronische Steuerungseinrichtung für den Kältemittelkompressor, welcher Kältemittelkompressor zumindest umfasst
- eine Antriebseinheit,
- einen mit der Antriebseinheit in Wirkverbindung stehenden Kompressionsmechanismus, mit zumindest einem sich in einem Zylinder eines Zylinderblocks zwischen einem unteren und einem oberen Totpunkt hin und her bewegenden, über eine Kurbelwelle angetriebenen Kolben,
   wobei die elektronische Steuerungseinrichtung, dazu eingerichtet ist,
- die Drehgeschwindigkeit der Antriebseinheit zu erfassen und zu steuern und/oder regeln,
- die Kolbenposition zu erfassen.

Die vorliegende Erfindung bezieht sich außerdem auf Verfahren zum Regeln eines Hubkolbenkältemittelkompressors, dessen Kompressionsmechanismus über eine Antriebseinheit mit einem Betriebsdrehmoment angetrieben wird, insbesondere auf ein Verfahren zum Regeln der Antriebseinheit des Hubkolbenkältemittelkompressors.

### STAND DER TECHNIK

Derartige elektronische Steuerungseinrichtungen kommen bei drehgeschwindigkeitsvariablen Kältemittelkompressoren zum Einsatz, insbesondere auch bei Kältemittelkompressoren die auf dem Hubkolbenprinzip aufbauen. Drehgeschwindigkeitsvariable Kältemittelkompressoren haben den Vorteil, dass sie spezifischer auf Kälteanforderungen des zu kühlenden Objekts abgestimmt werden können indem sie beispielsweise im Falle geringerer Kälteanforderungen mit geringerer Drehgeschwindigkeit und im Falle einer erhöhten Kälteanforderung, mit entsprechend erhöhter Drehgeschwindigkeit betrieben werden können.

Der Aufbau von drehgeschwindigkeitsvariablen Hubkolbenkältemittelkompressoren ist hinlänglich bekannt. Sie bestehen im Wesentlichen aus einer Antriebseinheit und einem Kompressionsmechanismus in Form eines in einem Zylindergehäuse sich zwischen einem oberen und unteren Totpunkt hin- und herbewegenden Kolben, der über ein Pleuel mit einer Kurbelwelle verbunden ist, die wiederum drehstarr mit einem Rotor der Antriebseinheit gekoppelt ist.

Als Antriebseinheit kommt typischerweise ein bürstenloser Gleichstrommotor zum Einsatz. Dabei ist es möglich die relative Position des Rotors des Gleichstrommotors und damit auch die Drehgeschwindigkeit des Motors bzw. des Kompressionsmechanismus auf Basis der in der Motorwicklung induzierten Gegenspannung (Induktionsgegenspannung) zu bestimmen. Dieses Verfahren kommt ohne separate Sensoren aus und ist daher besonders einfach zu implementieren und wenig störanfällig.

Problematisch gestaltet sich bei Hubkolbenkältemittelkompressoren sehr oft der normale, geregelte Betrieb bei geringen Drehgeschwindigkeiten sowie der Anhalteprozess.

Die Probleme beim Betrieb mit niedrigen Drehgeschwindigkeiten im normalen, geregelten Betrieb sind unter anderem auch geräuschtechnischer Art.

In der Saug- und Kompressionsphase wirken unterschiedliche Gaskräfte (bewirkt durch die Kältemitteldruckverhältnisse im System) und Reibungskräfte (beide gemeinsam werden als Lastmoment bezeichnet) auf den Kompressionsmechanismus, was bei genauerer Betrachtung in einer über den Kurbelwinkel ungleichförmigen, weil variierenden Drehzahl resultiert. In der vorliegenden Anmeldung wird grundsätzlich zwischen den Begriffen Drehzahl und Drehgeschwindigkeit unterschieden. Der Begriff Drehzahl wird verwendet, wenn die tatsächliche, momentane Drehzahl gemeint ist, die bei Hubkolbenkältemittelkompressoren nach dem Stand der Technik über den Kurbelwinkel variiert, wohingegen der Begriff Drehgeschwindigkeit dann verwendet wird, wenn die durchschnittliche Drehzahl einer Kurbelwellenumdrehung gemeint ist, also jener Wert der gemeinhin gemeint ist, wenn man von der Drehzahl eines Hubkolbenkältemittelkompressors spricht.

Konkret wirkt während der Kompressionsphase ein gegenüber der Saugphase erhöhtes Lastmoment auf den Kompressionsmechanismus, welches vom Betriebsdrehmoment der Antriebseinheit überwunden werden muss, um den Verdichtungsprozess in Gang zu halten. Das erhöhte Lastmoment in der Kompressionsphase führt bei Hubkolbenkältemittelkompressoren nach dem Stand der Technik, die mit konstanter Spannung betrieben werden, zu einer Verringerung der Drehzahl des Kompressionsmechanismus in der Kompressionsphase.

Während der Saugphase hingegen, bewirken die Gaskräfte gegenüber der Kompressionsphase ein verringertes Lastmoment. Dies führt zu einer Erhöhung der Drehzahl des Kompressionsmechanismus während der Saugphase.

Insgesamt wirkt somit ein über den Kurbelwinkel variierendes Lastmoment auf den Kompressionsmechanismus, wobei die Schwankungsbreite des Lastmomentes vor allem vom Druckverhältnis im Kältemittelkreislauf abhängt und zu unterschiedlich hohen Winkelbeschleunigungen und damit zu einer über den Kurbelwinkel ungleichförmigen Drehzahl des Kompressionsmechanismus während einer Kurbelwellenumdrehung führt.

Um Schwingungen und Vibrationen des Kompressionsmechanismus während des Betriebs auszugleichen ist dieser samt Antriebseinheit über Federelemente in einem Gehäuse gelagert. Die Eigenfrequenzen dieses Schwingungssystems liegen je nach Kompressortyp zwischen 5 Hz und 16 Hz.

Somit führt das während jeder Kurbelwellenumdrehung wiederkehrende, erhöhte Lastmoment während der Kompressionsphase, insbesondere bei Betrieb des Hubkolbenkältemittelkompressors bei Drehgeschwindigkeiten unterhalb eines Bereichs zwischen 1000 U/min und 700 U/min zu Stößen auf den Kompressionsmechanismus, welche den Kompressionsmechanismus samt Antriebseinheit in die Federelemente drückt und diese auslenkt, wobei die Stoßfrequenz im Bereich der Eigenfrequenz des Schwingungssystems liegt, so dass sich die Auslenkungen der Federelemente mit jeder Kurbelwellenumdrehung derart vergrößern, dass der Kompressionsmechanismus und/oder die Antriebseinheit gegen das Gehäuse schlagen können, wodurch es zu unerwünschten Schallemissionen kommen kann. Dieser Umstand ist auch ein Grund, dass bekannte Hubkolbenkältemittelkompressoren in der normalen, geregelten Betriebsphase nicht unterhalb eines Bereichs zwischen 1000 U/min und 700 U/min betrieben werden.

Die beschriebenen, unerwünschten Schallemissionen eines Hubkolbenkältemittelkompressors bei geringen Drehgeschwindigkeiten treten aber nicht nur im normalen, geregelten Betrieb auf sondern vor allem auch während des Anhalteprozesses, wo diese geringen Drehgeschwindigkeiten durchfahren werden müssen. Der Anhalteprozess läuft in der Regel wie folgt ab:
Ist nach einer entsprechend andauernden normalen, geregelten Betriebsphase des Kältemittelkompressors die Zieltemperatur des zu kühlenden Objektes, beispielsweise eines Kühlfachs eines Kühlschranks erreicht, sendet die elektronische Steuerungseinrichtung des Kühlschranks ein Signal an die elektronische Steuerungseinrichtung des Kältemittelkompressors, mit welchem dieser mitgeteilt wird, dass keine Kühlleistung mehr benötigt wird, da die Zieltemperatur erreicht ist. Aus dem Stand der Technik ist es bekannt, dass daraufhin die elektronische Steuerungseinrichtung des Kältemittelkompressors den Antrieb abschaltet (Abschaltzeitpunkt) und der Anhalteprozess beginnt.

Die Kurbelwelle des Kompressionsmechanismus durchläuft auch nach dem Abschaltzeitpunkt jeweils vollständige Umdrehungen beginnend beim oberen Totpunkt (Kurbelwinkel 0°), wobei zunächst eine Saugphase (korrekt: Saug- und Rückexpansionsphase) durchlaufen wird, während welcher Kältemittel in den Zylinder gesaugt wird. Diese Saugphase endet, theoretisch wenn der Zylinder den unteren Totpunkt (Kurbelwinkel 180°) erreicht hat. Danach beginnt die Kompressionsphase (korrekt: Kompressions- und Ausschiebephase, während welcher das im Zylinder befindliche Kältemittel komprimiert wird und aus dem Zylinder ausgeschoben wird. Die Kompressionsphase endet theoretisch, wenn der Kolben den oberen Totpunkt (Kurbelwinkel 360°) wieder erreicht hat. In der Praxis beginnt die tatsächliche Kompression des Kältemittels allerdings erst bei einem Kurbelwinkel von in etwa 210° (abhängig vom Kältemittelkompressor, den Druckverhältnisse, der Ventilauslegung, etc.) jedenfalls aber nach 180° und die Saugphase in etwa bei 30°, jedenfalls aber nach dem oberen Totpunkt.

Das Abschalten der Antriebseinheit des Kältemittelkompressors zu einem Abschaltzeitpunkt leitet den Anhalteprozess ein und führt dazu, dass sich der Kompressionsmechanismus in einem antriebslosen Zustand (ohne Betriebsdrehmoment) befindet und sich nur aufgrund seiner Massenträgheit noch weiter dreht, bis er vollkommen zum Stillstand gekommen ist, d. h. seine Drehgeschwindigkeit 0 ist. Umgangssprachlich könnte man auch sagen, dass der Kältemittelkompressor "ausläuft".

Während des antriebslosen Zustandes dreht sich der Kompressionsmechanismus/die Antriebseinheit ausschließlich aufgrund der kinetischen Energie, die sie zum Abschaltzeitpunkt inne haben sowie der Massenträgheit. Sie drehen sich damit sozusagen unkontrolliert und ihr Drehgeschwindigkeitsverhalten ist abhängig von dem auf den Kompressionsmechanismus wirkenden Lastmoment. Das Lastmoment führt zu einer Verringerung der Drehgeschwindigkeit des antriebslos ausdrehenden Kältemittelkompressors, so dass die kinetische Energie des Kompressionsmechanismus immer geringer wird, bis sie, abhängig von den Druckverhältnissen im Kältemittelkreislauf, möglicherweise nicht mehr ausreicht, um das Lastmoment zu überwinden (Grenzdrehgeschwindigkeit).

Dabei ist zu berücksichtigen, dass bei abgeschalteter Antriebseinheit, anders als während der normalen geregelten Betriebsphase, kein positives Betriebsdrehmoment existiert, welches dem Lastmoment, insbesondere dem erhöhten Lastmoment in der Kompressionsphase entgegenwirkt, so dass bei abgeschalteter Antriebseinheit die durch das erhöhte Lastmoment in der Kompressionsphase auf den Kompressionsmechanismus wirkenden Stöße sozusagen ungebremst durchschlagen und daher die Auswirkungen in Bezug auf die Auslenkung der Federelemente noch gravierender sind, als dies in der normalen geregelten Betriebsphase der Fall ist, wo das positive Betriebsdrehmoment den Stößen entgegenwirkt und diese damit etwas dämpft.

Dies wiederum führt dazu, dass die Auslenkung der Federelemente bei geringen Drehzahlen während des Anhalteprozesses noch größer ist als während des normalen geregelten Betriebs des Hubkolbenkältemittelkompressors bei denselben geringen Drehzahlen und damit die Wahrscheinlichkeit eines Kontaktes zwischen Kompressionsmechanismus/Antriebseinheit und Gehäuse ebenfalls höher ist, womit insgesamt eine höhere Lärmemission verbunden ist.

Hinzu kommt, dass für den Fall, dass sich der der Kolben gerade in einer Kompressionsphase befindet, die Situation eintreten kann, dass die kinetische Energie des Kompressionsmechanismus/der Antriebseinheit nicht mehr ausreicht, das Lastmoment zu überwinden und der Kolben des Kompressionsmechanismus wieder in Richtung unterer Totpunkt zurückgedrückt wird, sich die Drehrichtung des Kompressionsmechanismus damit umkehrt.

Mit der Drehrichtungsumkehr ist ein zusätzlicher, auf den Kompressionsmechanismus wirkender Anhalteruck verbunden, der den Kompressionsmechanismus/die Antriebseinheit in die Federelemente drückt und diese zusätzlich auslenkt.

Gerade während des Anhalteprozesses, wo, wie oben bereits beschrieben, kein positives Betriebsdrehmoment dem Lastmoment entgegenwirkt und das in der Kompressionsphase wirkende erhöhte Lastmoment sowieso schon stoßartig das Schwingungssystem in Bereich seiner Eigenfrequenz anregt, trägt der Anhaltruck aufgrund der Drehrichtungsumkehr noch mehr zur Auslenkung der Federelemente bei, so dass die Wahrscheinlichkeit, dass der Kompressionsmechanismus/die Antriebseinheit an der Gehäusewand anschlagen nochmals erhöht wird und damit unerwünschte Geräuschemissionen verursachen.

Aus dem Stand der Technik ist es bekannt, die antriebslose Phase durch Anlegen eines Bremsmomentes zu beenden und dadurch zumindest ein Zurückschlagen des Kältemittelkompressors und damit des Anhalterucks zu vermeiden. Konkret ist es aus der EP 2 669 519 A1 und der daraus abgezweigten DE 20 2012 013 046 U1 bekannt, den antriebslos drehenden Kompressionsmechanimus/Antriebseinheit nach dem Abschaltzeitpunkt bei Unterschreiten einer bestimmten Drehgeschwindigkeit mittels eines Bremsmomentes abzubremsen. Dazu ist es erforderlich, die Drehgeschwindigkeit des antriebslos drehenden Kompressionsmechanismus nach dem Abschaltzeitpunkt ständig zu überwachen und bei einer definierten Drehgeschwindigkeit, die jedenfalls noch ausreichend hoch sein muss, um das Lastmoment bis dahin zu überwinden, also über der Grenzdrehgeschwindigkeit liegen muss, den Kompressionsmechanismus mittels eines Bremsmomentes, welches an den Kompressionsmechanismus angelegt wird, aktiv abzubremsen.

Um die oben beschriebene Problematik im Zusammenhang mit den Stößen und der Stoßfrequenz aufgrund des erhöhten Lastmomentes während der Kompressionsphase zu vermeiden, wird das Bremsmoment allerdings bereits bei eher hohen Drehgeschwindigkeiten angelegt, was energetisch nachteilig ist und darüberhinaus auch zusätzliche Schallemissionen verursacht.

Aus den genannten Gründen kann somit zusammenfassend festgestellt werden, dass der Betrieb von bekannten drehgeschwindigkeitsvariablen Hubkolbenkältemittelkompressoren bei geringen Drehzahlen eine Anregung des Schwingungssystem im Bereich dessen Eigenfrequenzen verursacht und deshalb zu unerwünschten Schallemissionen führt, wobei dieser Effekt besonders stark während des Anhalteprozesses während des antriebslosen Auslaufens zu beobachten ist.

Im Zusammenhang mit dem Anhalteprozess eines Hubkolbenkältemittelkompressors führt das über den Kurbelwinkel stark variierende Lastmoment außerdem dazu, dass die Gefahr besteht, dass ab einer Grenzdrehgeschwindigkeit der Kompressionshub nicht mehr vollendet werden kann und der Kompressionsmechanismus in die Gegenrichtung zurückschlägt, wodurch das Schwingungssystem zusätzlich angeregt und die Federelemente zusätzlich ausgelenkt werden, was wiederum zu einer erhöhten Anschlagwahrscheinlichkeit des Kompressionsmechanismus/der Antriebseinheit führt.

### AUFGABE DER ERFINDUNG

Ziel der Erfindung ist es daher, ein Steuerungssystem umfassend einen Kältemittelkompressor und eine elektronische Steuerungseinrichtung für den Hubkolbenkältemittelkompressor vorzusehen sowie ein Verfahren zum Regeln eines Hubkolbenkältemittelkompressors vorzusehen, welches Steuerungssystem bzw. Verfahren den Betrieb eines Hubkolbenkältemittelkompressors auch bei geringen Drehgeschwindigkeiten ermöglicht, ohne dass es zu einer übermäßigen Auslenkung der Federelemente und daraus resultierend zu erhöhten Schallemissionen kommt.

Ein weiteres Ziel der Erfindung ist es, ein Steuerungssystem umfassend einen Kältemittelkompressor und eine elektronische Steuerungseinrichtung für einen Hubkolbenkältemittelkompressor vorzusehen sowie ein Verfahren zum Regeln eines Hubkolbenkältemittelkompressors vorzusehen, welches Steuerungssystem bzw. Verfahren ein lärmtechnisch optimiertes Anhalten des Hubkolbenkältemittelkompressors ermöglicht, ohne dass ein Bremsmoment an den Kompressionsmechanismus angelegt werden muss.

Ein weiteres Ziel der Erfindung ist es, ein Steuerungssystem umfassend einen Kältemittelkompressor und eine elektronische Steuerungseinrichtung für einen Hubkolbenkältemittelkompressor vorzusehen sowie ein Verfahren zum Regeln eines Hubkolbenkältemittelkompressors vorzusehen, welches Steuerungssystem bzw. Verfahren den Betrieb eines Hubkolbenkältemittelkompressors auch bei geringen Drehgeschwindigkeiten, insbesondere beim Durchfahren solcher geringer Drehgeschwindigkeiten während des Anhalteprozesses ermöglicht, ohne dass die Gefahr einer Drehrichtungsumkehr und damit verbunden, eines Anhalterucks, besteht.

Ein weiteres Ziel der Erfindung ist es, die Federelemente, mittels welcher der Kältemittelkompressor im Gehäuse gelagert ist, spezifischer auf die auftretenden Schwingungen des Kompressionsmechanismus abstimmen zu können.

Ein zusätzliches Ziel der Erfindung ist, ein Steuerungssystem umfassend einen Kältemittelkompressor und eine elektronische Steuerungseinrichtung für einen Hubkolbenkältemittelkompressor vorzusehen sowie ein Verfahren zum Regeln eines Hubkolbenkältemittelkompressors vorzusehen, welches Steuerungssystem bzw. Verfahren den Betrieb eine Hubkolbenkältemittelkompressors mit vergleichmäßigter Drehzahl ermöglicht, um die aufgrund des erhöhten Lastmomentes während der Kompressionsphase auf den Kompressionsmechanismus wirkenden Stöße zu dämpfen, wobei dabei gleichzeitig die Drehgeschwindigkeit verringert oder erhöht werden kann. Ein weiteres Ziel der Erfindung ist es, ein Steuerungssystem umfassend einen Kältemittelkompressor und eine elektronische Steuerungseinrichtung für einen Hubkolbenkältemittelkompressor vorzusehen sowie ein Verfahren zum Regeln eines Hubkolbenkältemittelkompressors vorzusehen, welches Steuerungssystem bzw. Verfahren es ermöglicht, die Drehgeschwindigkeit des Kompressionsmechanismus während des Anhalteprozesses sukzessive auf einer geringe Drehzahl zu verringern, so dass die Antriebseinheit nach Erreichen der geringen Drehzahl abgeschaltet werden kann, ohne dass nach dem Abschalten in der antriebslosen Phase die möglicherweise noch auftretenden Stöße während der Kompressionsphase eine Auslenkung der Federelemente bewirken, die größer ist, als die maximal zulässige Auslenkung, bei welcher ein Anschlagen des Kompressionsmechanismus/der Antriebseinheit am Gehäuse gerade noch nicht stattfindet.

### DARSTELLUNG DER ERFINDUNG

Erfindungsgemäß werden diese Ziele bei einem Steuerungssystem umfassend einen Kältemittelkompressor und eine elektronische Steuerungseinrichtung für einen Hubkolbenkältemittelkompressor, welcher zumindest umfasst eine Antriebseinheit, einen mit der Antriebseinheit in Wirkverbindung stehenden Kompressionsmechanismus, mit zumindest einem sich in einem Zylinder eines Zylinderblocks zwischen einem unteren und einem oberen Totpunkt hin und her bewegenden, über eine Kurbelwelle angetriebenen Kolben, wobei die elektronische Steuerungseinrichtung, dazu eingerichtet ist, die Drehgeschwindigkeit der Antriebseinheit zu erfassen und zu steuern und/oder regeln, die Kolbenposition zu erfassen, dadurch erreicht, dass die elektronische Steuerungseinrichtung dazu eingerichtet ist, den Kompressionsmechanismus über die Antriebseinheit derart anzutreiben, dass, für die Dauer eines mehr als eine Kurbelwellenumdrehung aufweisenden Regelungszeitabschnittes, bei mehreren Kurbelwellenumdrehungen, vorzugsweise bei jeder Kurbelwellenumdrehung des Regelungszeitabschnittes (Δt) zumindest ein Antriebswinkelabschnitt und zumindest ein Laufwinkelabschnitt vorgesehen ist und wobei der Kompressionsmechanismus während des mindestens einen Antriebswinkelabschnittes einem positiven Betriebsdrehmoment und während des zumindest einen Laufwinkelabschnittes einem gegenüber dem positiven Betriebsdrehmoment verringerten positiven Betriebsdrehmoment oder keinem positiven Betriebsdrehmoment ausgesetzt ist.

Das positive und/oder verringerte positive Betriebsdrehmoment kann während des Antriebswinkelabschnittes und/oder Laufwinkelabschnittes entweder konstant bleiben oder variieren, wobei in der Praxis schon aufgrund der weit verbreiteten Steuerung mittels konstanter Spannung eine Variation des positiven Betriebsdrehmomentes bzw. verringertem positiven Betriebsdrehmomentes in engen Grenzen auftritt.

Die erfindungsgemäße Steuerungseinrichtung des erfindungsgemäß ausgebildeten Steuerungssystems ermöglicht es, den Kompressionsmechanismus derart zu steuern, dass das über den Kurbelwinkel variierende Lastmoment durch ein ebenso variierendes, positives Betriebsdrehmoment zumindest teilweise ausgeglichen werden kann, wobei die elektronische Steuerungseinrichtung derart eingerichtet ist, dass das positive Betriebsdrehmoment zumindest einmal, bezogen auf eine Umdrehung der Kurbelwelle, variiert und das über einen Regelungszeitabschnitt hinweg, der mehrere, vorzugsweise aufeinanderfolgende, vorzugsweise 5 bis 15 aufeinanderfolgende Kurbelwellenumdrehungen umfasst. Das positive Betriebsdrehmoment kann dabei variieren zwischen einem Maximalwert, der im Wesentlichen von der Antriebseinheit abhängig ist und dem Wert Null.

Dadurch ist es möglich, die Antriebswinkelabschnitte so auf das Lastmoment abzustimmen, dass ein möglichst gleichförmiger Drehzahlverlauf pro Kurbelwellenumdrehung erzielt werden kann. Beispielsweise kann die Abstimmung so erfolgen dass der mindestens eine Antriebswinkelabschnitt innerhalb jener Betriebsphase des Kältemittelkompressors, in welcher eine erhöhtes Lastmoment auf den Kompressionsmechanismus wirkt (Kompressionsphase), vorgesehen ist und der mindestens eine Laufwinkelabschnitt in jener Betriebsphase des Kältemittelkompressors vorgesehen ist, in welcher ein gegenüber der Betriebsphase mit erhöhtem Lastmoment verringertes Lastmoment auf den Kompressionsmechanismus wirkt (Saugphase).

In Fällen, in welchen das Lastmoment basierend auf den im Kältemittelkreislauf vorherrschenden Druckunterschieden während einer Kurbelwellenumdrehung besonders stark variiert, ist es erfindungsgemäß vorgesehen, dass der Kompressionsmechanismus anstelle des verringerten positiven Betriebsdrehmomentes keinem positiven Betriebsdrehmoment während des zumindest einen Laufwinkelabschnittes ausgesetzt ist. In diesem Fall ist es sogar möglich ein Bremsmoment anstelle des positiven Betriebsdrehmomentes an den Kompressionsmechanismus anzulegen.

Insgesamt ergibt sich dadurch die Möglichkeit, den ungleichförmigen Verlauf der Drehzahl und des Lastmomentes über dem Kurbelwinkel gezielt auszugleichen. Darüberhinaus besteht dadurch die Möglichkeit, dem Kompressionsmechanismus gezielt ein (höheres) positives Betriebsdrehmoment zuzuführen, wenn dieser es benötigt um das gerade anstehende Lastmoment zu überwinden. Besonders bei geringen Drehgeschwindigkeiten können damit die durch das Lastmoment auf den Kompressionsmechanismus übertragenen, wiederkehrenden Stöße gezielt gedämpft, sogar gänzlich ausgeglichen werden.

Auf diese Art und Weise ist nicht nur ein Betrieb bei geringen Drehgeschwindigkeiten möglich, ohne dass die Gefahr einer Anregung des Schwingungssystems im Eigenfrequenzbereich besteht sondern kann derart auch eine Drehrichtungsumkehr des Kompressionsmechanismus wirkungsvoll verhindert werden, ohne dabei dessen Drehgeschwindigkeit insgesamt zu erhöhen.

Die Dauer des Regelungszeitabschnittes richtet sich nach den Anforderungen an die Gleichförmigkeit der Drehbewegung des Kompressionsmechanismus und kann entweder der gesamten Betriebsdauer des Kältemittelkompressors entsprechen, oder aber nur einem Teil davon. Besonders bevorzugt beginnt der Regelungszeitabschnitt, wenn ein Signal der elektronischen Steuerungseinrichtung eines Kühlschranks, das Erreichen einer Zieltemperatur in einem Kühlraum signalisiert und endet gleichzeitig mit dem Abschalten der Antriebseinheit (Abschaltzeitpunkt).

In diesem Fall ist die elektronische Steuerungseinrichtung des Steuerungssystems auch dazu eingerichtet, die Drehgeschwindigkeit der Antriebseinheit und damit des Kompressionsmechanismus während des Regelungszeitabschnittes zu reduzieren, obwohl je Kurbelwellenumdrehung über einen bestimmten Kurbelwinkelbereich gezielt ein positives Betriebsdrehmoment am Kompressionsmechanismus anliegt. Neben der Vergleichförmigung der Drehzahl über den Kurbelwinkel kann dadurch auch eine konstante Reduktion der Drehgeschwindigkeit des Kompressionsmechanismus erzielt werden.

Mittels der erfindungsgemäßen elektronischen Steuerungseinrichtung des erfindungsgemäß ausgebildeten Steuerungssystems ist auch eine Erhöhung der Drehgeschwindigkeit der Antriebseinheit zu erreichen, so dass dadurch auch eine konstante Beschleunigung des Kompressionsmechanismus erzielt werden kann, was insbesondere für die Startphase von Vorteil ist.

Gemäß eine besonders bevorzugten Ausführungsvariante der Erfindung ist das Verhältnis zwischen positivem Betriebsdrehmoment und verringertem positiven Betriebsdrehmoment >= 1/0,2, vorzugsweise >= 1/0,1 besonders bevorzugt >= 1/0,03. Da die Bestimmung der Drehgeschwindigkeit eines drehgeschwindigkeitsvariablen Kältemittelkompressors und damit die Regelung besonders komfortabel auf Basis der in der Motorwicklung induzierten Gegenspannung erfolgt, ist es von Vorteil, den Kältemittelkompressor in dem mindestens einen Laufwinkelabschnitt mit, wenn auch sehr geringem, positiven Betriebsdrehmoment, verglichen mit jenem im Antriebswinkelabschnitt, anzutreiben, da damit eine besonders stabile Detektion der induzierten Gegenspannung möglich ist. Im Normalfall ist es ausreichend, dass das Verhältnis zwischen positivem Betriebsdrehmoment und verringertem positiven Betriebsdrehmoment größer als 1/0,03 ist, dh. wenn das verringerte positive Betriebsdrehmoment weniger als 3% vom positiven Betriebsdrehmoment im Antriebszeitabschnitt ist, um immer noch eine ausreichend stabile induzierte Gegenspannung detektieren zu können. Gleichzeitig ermöglicht es dieses geringe Betriebsdrehmoment, dass die Drehzahl des Kompressionsmechanismus während des Laufwinkelabschnittes praktisch nicht zunimmt, was den Einsatz der erfindungsgemäßen elektronischen Steuerungseinrichtung insbesondere zum gleichförmigen Reduzieren der Drehgeschwindigkeit vor dem Abschalten des Antriebs ermöglicht.

Gemäß einer weiteren bevorzugten Ausführungsform der Erfindung ist es vorgesehen, dass die elektronische Steuerungseinrichtung des erfindungsgemäßen Steuerungssystems dazu eingerichtet ist, während einer Kurbelwellenumdrehung mehrere Antriebswinkelabschnitte und mehrere Laufwinkelabschnitte abwechselnd vorzusehen. Dadurch ist es möglich auf das, bezogen auf eine Kurbelwellenumdrehung variierende Lastmoment, besonders spezifisch einzugehen. Die einzelnen Antriebs- und Laufwinkelabschnitte kann dabei unterschiedlich groß sein, somit unterschiedliche Kurbelwinkel abdecken und gemeinsam mit dem Verhältnis zwischen positivem Betriebsdrehmoment und verringertem positiven Betriebsdrehmoment ganz an den Verlauf des Lastmomentes abgestimmt sein, so dass die Ungleichförmigkeit der Drehzahl über dem Kurbelwinkel nicht nur annähernd sondern nahezu vollkommen ausgeglichen werden kann und der Kompressionsmechanismus auch bei geringen Drehgeschwindigkeiten sehr gleichförmig dreht. Mit anderen Worten kann aufgrund der erfindungsgemäßen elektronischen Steuerungseinrichtung bei Hubkolbenkältemittelkompressoren eine sehr harmonische Drehbewegung des Kompressionsmechanismus erreicht werden, da die Drehzahl über den Kurbelwinkel betrachtet konstant bzw. annähernd konstant gehalten werden kann, jedenfalls aber so konstant, dass eine Anregung des Schwingungssystem in Eigenfrequenzbereich vermieden werden kann.

Gemäß einer weiteren bevorzugten Ausführungsvariante der Erfindung ist es vorgesehen, dass die elektronische Steuerungseinrichtung des erfindungsgemäßen Steuerungssystems dazu eingerichtet ist, während einer vollständigen Kurbelwellenumdrehung genau einen Antriebswinkelabschnitt und genau einen Laufwinkelabschnitt vorzusehen, wobei in diesem Fall bevorzugterweise Antriebswinkelabschnitt und Laufwinkelabschnitt gemeinsam eine Kurbelwellenumdrehung, also 360° umfassen. Dabei handelt es sich um eine besonders einfache Art und Weise der Steuerung, in dem während einer Kurbelwellenumdrehung das Betriebsdrehmoment der Antriebseinheit genau einmal erhöht wird und während der restlichen Kurbelwellenumdrehung wieder verringert wird, bevorzugt auf den oben beschriebenen Wert verringert wird, oder aber gänzlich ausgesetzt wird.

Bei einer besonders bevorzugten Ausführungsvariante der Erfindung ist es vorgesehen, dass der genau eine Antriebswinkelabschnitt während eines Kurbelwinkels von 220° bis 360° vorgesehen ist, besonders bevorzugt während eines Kurbelwinkels von 270° bis 360°. In diesem Bereich befindet sich der Kolben in der Kompressionsphase und das zuführen des positiven Betriebsdrehmomentes in dieser Phase während eines Kurbelwinkels zwischen 220° und 360° ist in den meisten Fällen der Praxis ausreichend, um bei geringen Drehgeschwindigkeiten des Kompressionsmechanismus die auf diesen aufgrund des Lastmoment wirkenden Stöße ausreichend zu dämpfen, um zu starke Auslenkungen der Federelemente zu vermeiden. Darüberhinaus kann das zuführen eines positiven Betriebsdrehmomentes in diesem Abschnitt des Kurbelwinkels auch dazu benutzt werden, den Kolben vor einer Drehrichtungsumkehr zu bewahren, falls die kinetische Energie der Einheit bestehend aus Kompressionsmechanismus und Antriebseinheit im antriebslosen Zustand nicht mehr ausreichen sollte, um das Lastmoment zu überwinden.

Besonders bevorzugt ist die elektronische Steuerungseinrichtung des erfindungsgemäßen Steuerungssystems dazu eingerichtet, den oder die Antriebswinkelabschnitte mit positivem Betriebsdrehmoment vorzusehen, wenn der Kolben sich grundsätzlich zwischen einem unteren und einem oberen Totpunkt in einer Kompressionsphase befindet, denn dadurch kann der Kolben sehr präzise entsprechend dem auf ihn wirkenden Lastmoment angetrieben werden. Gerade wenn der Kompressionsmechanismus seine Drehgeschwindigkeit insgesamt verlangsamen soll, um in weiterer Folge abgeschaltet zu werden, ist es durch das Vorsehen des oder der Antriebswinkelabschnitte während der Kompressionsphase möglich, den Kolben gerade soviel anzutreiben, dass dieser gerade noch die Kompressionsphase beenden kann, ohne dass Gefahr besteht, dass dieser mangels ausreichender kinetischer Energie zurückschlägt.

Weiters kann die elektronische Steuerungseinrichtung des erfindungsgemäßen Steuerungssystems die Laufwinkelabschnitte mit verringertem positiven Betriebsdrehmoment bzw. ohne positivem Betriebsdrehmoment dann vorsehen, wenn der Kolben sich zwischen einem oberen und einem unteren Totpunkt in einer Saugphase befindet. Der Kompressionsmechanismus erfährt dadurch in der Saugphase keinen oder nur sehr geringen Antrieb durch die Antriebseinheit.

Insgesamt kann damit nicht nur eine gleichförmige Drehung des Kompressionsmechanismus mit konstanter oder annähernd konstanter Drehzahl während einer Kurbelwellenumdrehung und damit auch eine Dämpfung der vom Lastmoment in der Kompressionsphase herrührende Stöße auch bei geringen Geschwindigkeit ermöglicht werden, sondern darüberhinaus ist es dadurch auch möglich, den Abschaltzeitpunkt auf eine Drehgeschwindigkeit zu verschieben, die eine sehr geringe ist, beispielsweise 250 U/min, da das Durchfahren von geringen Drehgeschwindigkeiten während des Anhalteprozesses aus den oben genannten Gründen keine geräuschtechnischen Probleme mehr verursacht.

Gemäß einer weiteren bevorzugten Ausführungsvariante der Erfindung ist es vorgesehen, dass die elektronische Steuerungseinrichtung dazu eingerichtet ist, zu einem Abschaltzeitpunkt die Antriebseinheit stromlos zu schalten, so dass diese kein positives Betriebsdrehmoment mehr erzeugt, um den Kompressionsmechanismus bis zum Stillstand auslaufen zu lassen.

Besonders bevorzugt ist die elektronische Steuerungseinrichtung derart eingerichtet, dass sie den Regelungszeitabschnitt unmittelbar vor dem Abschaltzeitpunkt vorsieht. Dadurch kann die Drehgeschwindigkeit des Kompressionsmechanismus bis zu einer sehr geringen Drehgeschwindigkeit mit den oben beschriebenen Vorteilen heruntergeregelt werden und der Kältemittelkompressor dann abgeschaltet werden, wobei die elektronische Steuerungseinrichtung bevorzugterweise dazu eingerichtet ist, den Abschaltzeitpunkt so zu wählen, dass die kinetische Energie der Einheit bestehend aus Kompressionsmechanismus und Antriebseinheit zum Abschaltzeitpunkt ausreicht, um dem Kolben das Überwinden zumindest des auf den Abschaltzeitpunkt folgenden nächsten oberen Totpunktes zu ermöglichen und/oder dass der Kolben des Kompressionsmechanismus nach Erreichen des auf den Abschaltzeitpunkt folgenden nächsten oberen Totpunktes und vor Erreichen des auf diesen oberen Totpunkt unmittelbar folgenden weiteren unteren Totpunkt zum Stillstand kommt und/oder dass der Kolben des Kompressionsmechanismus nach dem auf den Abschaltzeitpunkt folgenden nächsten oberen Totpunkt und vor Erreichen eines an diesen nächsten oberen Totpunktes anschließenden Kurbelwinkels von 220° zum Stillstand kommt. Dadurch ist gewährleistet, dass der Kolben des Kompressionsmechanismus trotz des Umstandes, dass kein Bremsmoment an den Kompressionsmechanismus angelegt wird, dennoch ungeregelt und ungebremst auslaufen kann, ohne dass die Gefahr des Zurückschlagens des Kolbens besteht bzw. falls doch ein Zurückschlagen eintreten soll, der dabei auf den Kompressionsmechanismus ausgeübte Impuls keine unzulässig große Auslenkung der Federelemente verursacht.

Gemäß einer weiteren bevorzugten Ausführungsvariante der Erfindung ist es vorgesehen, dass die elektronische Steuerungseinrichtung des erfindungsgemäßen Steuerungssystems dazu eingerichtet ist, das positive Betriebsdrehmoment eines jeden Antriebszeitabschnittes und das gegenüber dem positiven Betriebsdrehmoment verringerte positive Betriebsdrehmoment eines jeden Laufzeitabschnittes für jeden Kurbelwinkel einer Kurbelwellenumdrehung des Regelungszeitabschnittes derart vorzusehen, dass es dem auf den Kompressionsmechanismus wirkenden Lastmoment Lm an dem jeweiligen Kurbelwinkel entspricht. Dadurch ist es möglich, das Lastmoment sozusagen zu spiegeln und als Betriebsdrehmoment auf den Kompressionsmechanismus auszuüben, wodurch sich eine über den Kurbelwinkel besonders gleichförmige Drehzahl erzielen lässt.

Die eingangs erwähnten Ziele werden außerdem mittels eines Verfahren zum Regeln eines Hubkolbenkältemittelkompressors, dessen Kompressionsmechanismus über eine Antriebseinheit mit einem Betriebsdrehmoment angetrieben wird, dadurch erreicht, dass es die folgenden Schritte
- während eines mehr als eine Kurbelwellenumdrehung aufweisenden Regelungszeitabschnittes (Δt)
- bei mehreren, vorzugsweise bei allen Kurbelwellenumdrehungen des Regelungszeitabschnittes (Δt),
jeweils aufweist:
- detektieren der Position der Kurbelwelle (6) oder des Kolbens (9) des Hubkolbenkältemittelkompressors (1)
- vergleichen der detektierten Position mit zumindest einer vorgegebenen Referenzposition
- ab der zumindest einen vorgegebenen Referenzposition, antreiben des Kompressionsmechanismus (5) mit einem positiven Betriebsdrehmoment (Bm) für die Dauer zumindest eines Antriebswinkelabschnittes (ΔΦ) einer Kurbelwellenumdrehung
- antreiben des Kompressionsmechanismus (5) mit einem gegenüber dem positiven Betriebsdrehmoment (Bm) verringerten positiven Betriebsdrehmoment (Bmv) oder keinem positiven Betriebsdrehmoment für die Dauer zumindest eines Laufwinkelabschnittes (Δτ)

Gemäß einer bevorzugten Ausführungsvariante des erfindungsgemäßen Verfahrens ist es vorgesehen, dass das Verhältnis zwischen positivem Betriebsdrehmoment (Bm) und verringertem positiven Betriebsdrehmoment (Bmv) >= 1/0,2, vorzugsweise >= 1/0,1 besonders bevorzugt >= 1/0,03 ist.

Gemäß einer weiteren bevorzugten Ausführungsvariante des erfindungsgemäßen Verfahrens ist es vorgesehen, dass mehrere Referenzpositionen vorgesehen sind.

Gemäß einer anderen bevorzugten Ausführungsvariante des erfindungsgemäßen Verfahrens ist es vorgesehen während einer Kurbelwellenumdrehung genau ein Antriebswinkelabschnitt und ein Laufwinkelabschnitt vorgesehen sind.

Gemäß einer weiteren bevorzugten Ausführungsvariante des erfindungsgemäßen Verfahrens ist es vorgesehen, dass die zumindest eine Referenzposition während eines Kurbelwinkels von 220° bis 360° vorgesehen ist, besonders bevorzugt während eines Kurbelwinkels von 270° bis 360°.

Gemäß einer weiteren bevorzugten Ausführungsvariante des erfindungsgemäßen Verfahrens ist es vorgesehen, dass die Drehgeschwindigkeit des Hubkolbenkältemittelkompressors während des Regelungszeitabschnittes reduziert oder erhöht wird.

Gemäß einer weiteren bevorzugten Ausführungsvariante des erfindungsgemäßen Verfahrens ist es vorgesehen, dass der Regelungszeitabschnitt unmittelbar vor einem Abschaltzeitpunkt vorgesehen ist, nach zu welchem die Antriebseinheit stromlos geschalten wird, vorzugsweise den Regelungszeitabschnitt zu beginnen, wenn ein Signal der elektronischen Steuerungseinrichtung eines Kühlschranks, das Erreichen einer Zieltemperatur in einem Kühlraum signalisiert.

### KURZE BESCHREIBUNG DER FIGUREN

Die Erfindung wird nun unter Bezugnahmen auf die folgenden Figuren, anhand eines oder mehrerer Ausführungsbeispiele näher erläutert.
- Fig.1: eine schematische Darstellung eines Hubkolbenkältemittelkompressors in einem Kältemittelkreislauf
- Fig.2: eine schematische Ansicht eines Kompressionsmechanismus
- Fig.3: ein Diagramm betreffend den Lastmomentverlauf und Betriebsdrehmomentverlauf über dem Kurbelwinkel bei einem Hubkolbenkältemittelkompressor gemäß dem Stand der Technik
- Fig.4: ein Diagramm betreffend die Winkelbeschleunigung der Kurbelwelle über dem Kurbelwinkel bei einem Hubkolbenkältemittelkompressor gemäß dem Stand der Technik
- Fig.5: ein Diagramm betreffend den Lastmomentverlauf und Betriebsdrehmomentverlauf über dem Kurbelwinkel bei Einsatz einer erfindungsgemäßen elektronischen Steuerungseinrichtung eines erfindungsgemäßen Steuerungssystems
- Fig.6: ein Diagramm betreffend die Winkelbeschleunigung der Kurbelwelle über dem Kurbelwinkel bei Einsatz einer erfindungsgemäßen elektronischen Steuerungseinrichtung eines erfindungsgemäßen Steuerungssystems
- Fig.7: ein Diagramm betreffend den Lastmomentverlauf und Betriebsdrehmomentverlauf über dem Kurbelwinkel bei gespiegeltem Betriebsdrehmoment
- Fig.8: ein Diagramm betreffend die Winkelbeschleunigung der Kurbelwelle über dem Kurbelwinkel bei gespiegeltem Betriebsdrehmoment
- Fig.9: ein Diagramm betreffend den Lastmomentverlauf und Betriebsdrehmomentverlauf über dem Kurbelwinkel während eines Anhalteprozesses
- Fig.10: ein Diagramm betreffend den Lastmomentverlauf und Betriebsdrehmomentverlauf über der Zeit während eines Anhalteprozesses

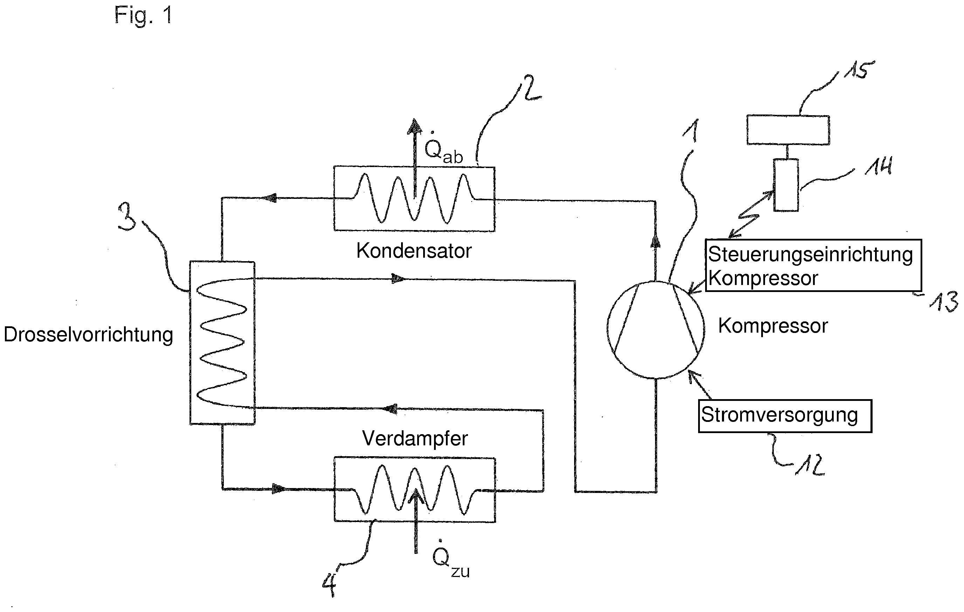

Fig.1 zeigt eine schematische Darstellung eines an eine elektrische Stromversorgung 12 angeschlossenen, über eine elektronische Steuereinrichtung 13 geregelten Hubkolbenkältemittelkompressors 1 in einem an sich bekannten Kühlmittelkreislauf mit einem Kondensator 2 einer Drosselvorrichtung 3 sowie einem Verdampfer 4. Das Kältemittel nimmt im Verdampfer 4 Wärme aus dem Kühlraum auf, wodurch dieser gekühlt wird. Das verdampfte Kältemittel wird über den Kompressionsmechanismus 5 des Hubkolbenkältemittelkompressors 1 auf eine höhere Temperatur verdichtet und in weiterer Folge im Kondensator 2 wieder verflüssigt, um schlussendlich über die Drosselvorrichtung 3 wieder dem Verdampfer 4 des Kühlraums zugeführt zu werden.

Im vorliegenden Ausführungsbeispiel kommuniziert die elektronische Steuerungseinrichtung 13 das Kältemittelkompressors 1 mit einer elektronischen Steuerungseinrichtung 14 eines Kühlschranks 15. Allerdings wird eine solche Kommunikationsmöglichkeit als nicht erfindungswesentlich angesehen, denn es ist auch denkbar, dass die elektronische Steuerungseinrichtung 13 mit einem Kühlschrank 15 kommuniziert, der selbst keine eigene elektronische Steuerungseinrichtung aufweist sondern lediglich einen Thermostat.

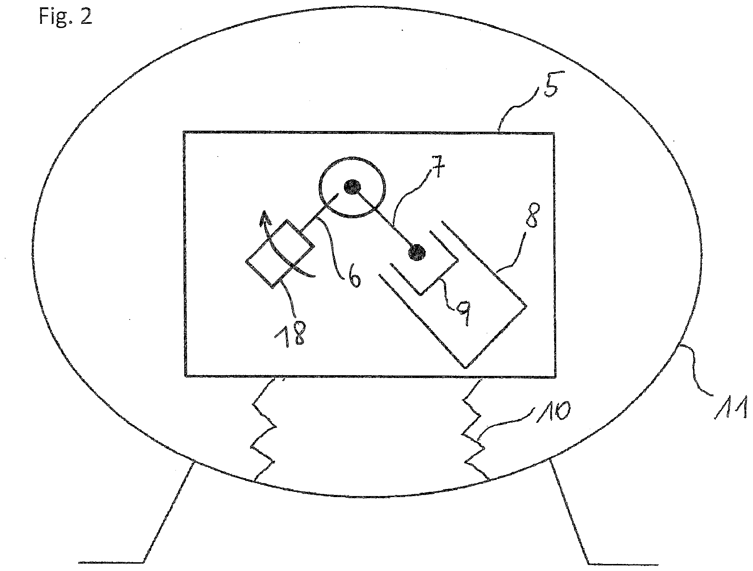

Fig.2 zeit eine schematische Ansicht des Kompressionsmechanismus 5 bestehend aus einer mittels einer Antriebseinheit 18 angetriebenen Kurbelwelle 6, einem Pleuel 7 sowie einem in einem Zylinderblock 8 auf und ab bewegbaren Kolben 9. Der Kompressionsmechanismus 5 ist über Federelemente 10 in einem Gehäuse 11 gelagert, welche Federelemente 10 die aufgrund der Drehung der Kurbelwelle 6 sowie der Bewegungen des Kolbens 9 auftretenden Schwingungen der Einheit bestehend aus Kompressionsmechanismus 5 und Antriebseinheit 18 aufnehmen und ausgleichen soll.

Bei der von der elektronischen Steuerungseinrichtung 13 gesteuerten Antriebseinheit 18 handelt es sich um eine drehgeschwindigkeitsvariable Antriebseinheit 18, typischerweise um einen bürstenlosen Gleichstrommotor, dessen Drehgeschwindigkeit mittels der elektronischen Steuerungseinrichtung 13 geregelt werden kann. Die für die Regelung der Drehgeschwindigkeit erforderliche Erfassung der Istdrehgeschwindigkeit erfolgt durch Detektion der in der Motorwicklung induzierten Gegenspannung (Induktionsgegenspannung), so dass keine weiteren Sensoren erforderlich sind, wenngleich die erfindungsgemäße elektronische Steuerungseinrichtung 13 eines erfindungsgemäßen Steuerungssystems selbstverständlich auch mit separaten Sensoren zur Drehgeschwindigkeitsmessung zusammenarbeiten kann, wie beispielsweise Hall Sensoren.

Während der Betriebsdauer eines drehgeschwindigkeitsvariablen Hubkolbenkältemittelkompressors sind grundsätzlich 3 Phasen zu unterscheiden:
- die Startphase
- die normale, geregelte Betriebsphase
- der Anhalteprozess

Basis bildet eine vom Benutzer eines Kühlschranks 15 in Grenzen vorwählbare Kühlraumtemperatur (=Zieltemperatur) des Kühlschranks 15. Geht man von einem auf die Zieltemperatur gekühlten Kühlraum aus und wird der Kühlschrank 15 beladen bzw. wird die Kühlschranktür geöffnet, strömt warme Luft in den Kühlraum. Die elektronische Steuerungseinrichtung 14 des Kühlschranks 15 detektiert, dass die Kühlraumtemperatur ansteigt und sendet ein Signal (in der Regel ein Frequenzsignal) an die elektronische Steuerungseinrichtung 13 des Kältemittelkompressors 1, mit welchem letzterer mitgeteilt wird, dass Kühlleistung benötigt wird, woraufhin diese den Kältemittelkompressor 1 entsprechend ihrer Programmierung steuert und regelt, um (mehr oder weniger) Kühlleistung zu liefern.

Im gegenständlichen Beispiel wird die elektronische Steuerungseinrichtung 13 des Kältemittelkompressors 1 diesen starten, um das Kältemittel zu verdichten und dem Kühlraum Wärme zu entziehen und die Zieltemperatur wieder zu erreichen. Dieses "Anspringen" leitet die Startphase ein. Dabei wird der Kältemittelkompressor 1, konkret dessen Antriebseinheit 18, auf eine bestimmte, von der elektronischen Steuerungseinrichtung 13 des Kältemittelkompressors 1 vorgegebene Drehgeschwindigkeit beschleunigt. Das Erreichen dieser Drehgeschwindigkeit beendet die Startphase. Zu diesem Zeitpunkt ist die Zieltemperatur in der Regel noch nicht erreicht.

Der Kältemittelkompressor geht dann in die normale, geregelte Betriebsphase über. Diese hält an, solange der Kältemittelkompressor 1 eingeschaltet ist oder etwas technischer formuliert, solange dem Kältemittel über den Kompressionsmechanismus 5 Energie zugeführt wird und die Antriebseinheit 18 des Kältemittelkompressors 1 ein Betriebsdrehmoment erzeugt. Der Kompressionsmechanismus 5 kann sich während dieser normalen, geregelten Betriebsphase mit unterschiedlichen Drehgeschwindigkeit drehen, je nach dem, ob dem Kühlraum mehr oder weniger Wärme entzogen werden soll. Öffnet man beispielsweise die Türe des Kühlschranks 15 während einer solchen normalen, geregelten Betriebsphase, so wird aufgrund der einströmenden warmen Luft, die elektronische Steuerungseinrichtung 14 des Kühlschranks 15 mehr Kühlleistung vom Kältemittelkompressor 1 fordern, so dass die elektronischen Steuerungseinrichtung 13 des Kältemittelkompressors 1 die Drehgeschwindigkeit der Antriebseinheit 18 und damit des Kompressionsmechanismus 5 erhöht, um die in den Kühlraum einströmende Wärme abtransportieren zu können.

Die Erhöhung der Drehgeschwindigkeit ist verbunden mit einem erhöhten Energiebedarf des Kältemittelkompressors 1. Erkennt die elektronische Steuerungseinrichtung 14 des Kühlschranks 15, dass sich die aktuelle Kühlraumtemperatur der Zieltemperatur annähert, so wird die elektronische Steuerungseinrichtung 14 des Kühlschranks 15 ein entsprechendes Signal an die elektronischen Steuerungseinrichtung 13 des Kältemittelkompressors 1 senden, um weniger Kühlleistung zu fordern und nicht über die Zieltemperatur "hinauszuschießen" und sich dieser langsam anzunähern. Die elektronische Steuerungseinrichtung 13 des Kältemittelkompressors 1 wiederum wird aufgrund dieser Anforderung die Drehgeschwindigkeit der Antriebseinheit 18/des Kompressionsmechanismus 5 reduzieren.

Erkennt die elektronische Steuerungseinrichtung 14 des Kühlschranks 15, dass zwischenzeitlich die Kühlraumtemperatur wieder ansteigt, weil beispielsweise der Kühlraum neu beladen wurde, so wird die elektronische Steuerungseinrichtung 14 des Kühlschranks 15 von der elektronischen Steuerungseinrichtung 13 des Kältemittelkompressors 1 wieder mehr Kühlleistung fordern, so dass diese die Drehgeschwindigkeit der Antriebseinheit 18 /des Kompressionsmechanismus 5 wieder erhöhen wird.

Ist nach einer entsprechend andauernden normalen, geregelten Betriebsphase die Zieltemperatur erreicht, sendet die elektronische Steuerungseinrichtung 14 des Kühlschranks 15 ein Signal an die elektronische Steuerungseinrichtung 13 des Kältemittelkompressors 1, mit welchem dieser mitgeteilt wird, dass die Zieltemperatur erreicht ist. Daraufhin schaltet die elektronische Steuerungseinrichtung 13 des Kältemittelkompressors 1 die Antriebseinheit 18 ab (Abschaltzeitpunkt AZ). Das Abschalten der Antriebseinheit 18 führt dazu, dass sich der Kompressionsmechanismus 5 samt Antriebseinheit 18 in einem antriebslosen Zustand befindet und nur aufgrund der Massenträgheit weiter dreht bis die Drehgeschwindigkeit 0 ist. Umgangssprachlich könnte man auch sagen, dass der Kältemittelkompressor "ausläuft".

Während des Betriebs des Kompressionsmechanismus kommt es zu vom Lastmoment während der Kompressionsphase auf den Kompressionsmechanismus 5 ausgeübten Stößen, die sich mit jeder Kurbelwellenumdrehung wiederholen und bei geringen Drehgeschwindigkeiten mit der Eigenfrequenz des durch die Federelemente 10 gebildeten Schwingungssystems zusammenfallen können, wodurch deren Auslenkung derart ansteigt, dass es zu Berührungen zwischen der Einheit bestehend aus Kompressionsmechanismus 5 und Antriebseinheit 18 mit dem Gehäuse 11 kommen kann, wodurch unerwünschte Schallemissionen erzeugt werden.

Darüberhinaus kann es während des Anhalteprozesses, wenn die Antriebseinheit 18 kein Betriebsdrehmoment mehr erzeugt zu einer Drehrichtungsumkehr des Kompressionsmechanismus 5 kommen, wodurch ein zusätzlicher Stoß auf den Kompressionsmechanismus ausgeübt wird, der ebenfalls eine unerwünscht starke Auslenkung der Federelemente 11 zur Folge hat, mit dem Resultat, dass auch durch diese Drehrichtungsumkehr die Gefahr besteht, dass die Einheit bestehend aus Kompressionsmechanismus 5 und Antriebseinheit 18 mit dem Gehäuse 11 in Kontakt gebracht wird und Schallemissionen verursacht.

Zusammenfassend kann festgehalten werden, dass geringe Drehgeschwindigkeiten, unabhängig davon, ob sich der Kältemittelkompressor in der Startphase, der normalen, geregelten Betriebsphase oder aber dem Anhalteprozess befindet, stets die Gefahr bergen, dass das durch die Federelemente 10 gebildete Schwingungssystem im Bereich seiner Eigenfrequenz angeregt wird und es dadurch zu den beschriebenen, Lärm verursachenden Berührungen zwischen der Einheit bestehend aus Kompressionsmechanisus 5 und Antriebseinheit 18 und Gehäuse 11 kommt.

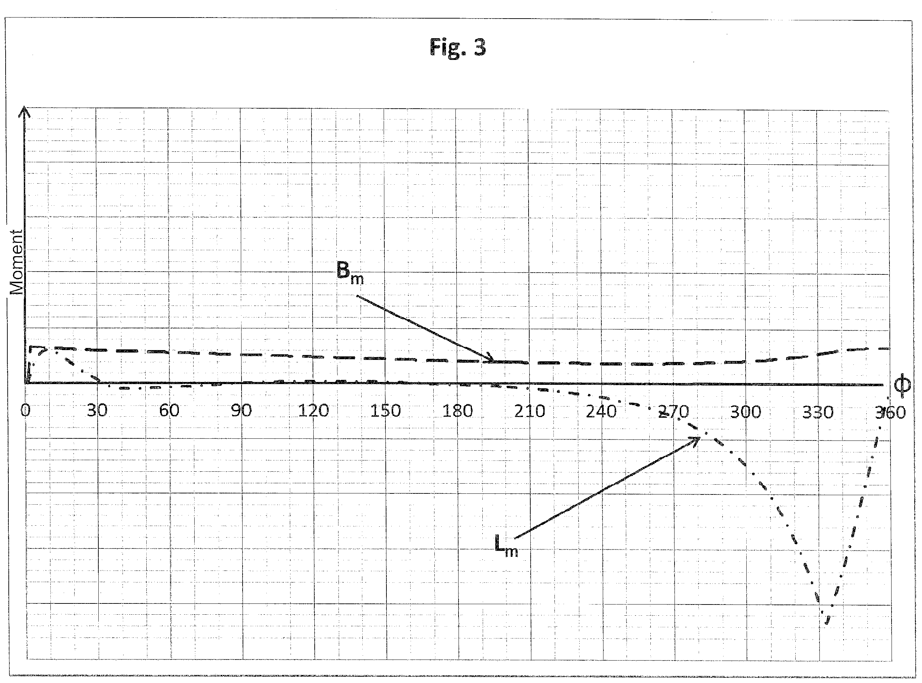

Fig.3 zeigt ein Diagramm des Verlaufs des Lastmomentes Lm über dem Kurbelwinkel Φ während einer normalen, geregelten Betriebsphase eines aus dem Stand der Technik bekannten Hubkolbenkältemittelkompressors, dessen Antriebseinheit 18 den Kompressionsmechanismus 5 mit einem Betriebsdrehmoment Bm antreibt. Dabei wurde angenommen, dass sich die Kurbelwelle im Uhrzeigersinn dreht. Die Drehrichtung erfolgt somit von 0° (oberer Totpunkt) zu 360° (oberer Totpunkt).

Wie sich aus dem Diagramm ergibt, ist das Lastmoment Lm kurz bevor der Kolben 9 in der Kompressionsphase den oberen Totpunkt erreicht, also bei ca. 330° am höchsten und ist zu Beginn der Saugphase, also im vorliegenden Fall bei ca. 10° negativ, dh. dass das Lastmoment Lm in diesem Abschnitt der Saugphase (Rückexpansionsphase) die Drehung des Kompressionsmechanismus 5 sogar unterstützt.

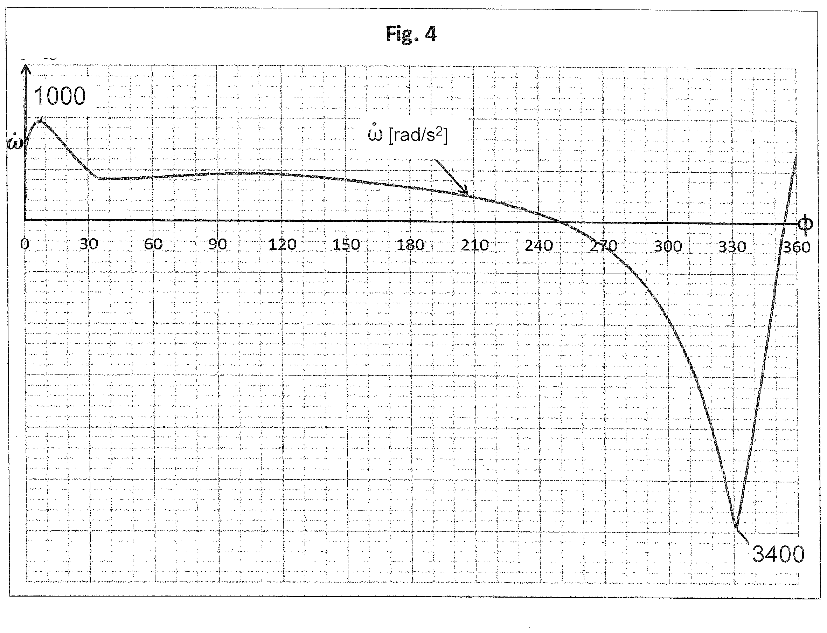

Fig.4 zeigt ein Diagramm, bei welchem die Winkelbeschleunigung *ω̇* der Kurbelwelle 6 über dem Kurbelwinkel Φ als Ergebnis des Verhältnisses zwischen Lastmoment Lm und Betriebsdrehmoment Bm wie in Fig. 3 dargestellt, aufgetragen ist.

Man erkennt, dass die maximale negative Winkelbeschleunigung *ω̇* der Kurbelwelle 6 zum Zeitpunkt des maximalen Lastmomentes Lm auftritt, wohingegen die Winkelbeschleunigung *ω̇* während der Saugphase sowie zu Beginn der Kompressionsphase bis etwa 250° positiv ist, so dass die Drehgeschwindigkeit der Kurbelwelle 6 in diesem Kurbelwinkelbereich erhöht wird.

Die Winkelbeschleunigung *ω̇* variiert dabei im vorliegenden Ausführungsbeispiel zwischen den Werten von ca. -3400 rad/s² und ca. +1000 rad/s². Dieser Umstand führt dazu, dass, trotz anliegendem Betriebsdrehmoment Bm bezogen auf eine Kurbelwellenumdrehung die Drehung des Kompressionsmechanismus 5, insbesondere der Kurbelwelle 6 eine sehr ungleichförmige ist und im Bereich eines Kurbelwinkels von ca. 330° das Lastmoment Lm einen Stoß auf den Kompressionsmechanismus 5 ausübt, der sich jede Kurbelwellenumdrehung wiederholt und die weiter oben bereits ausführlich beschriebenen Schwingungen erzeugen, mit den ebenfalls bereits beschriebenen, negativen Effekten, wobei das Lastmoment Lm mit abnehmender Drehgeschwindigkeit ω zunimmt.

In der Praxis werden Hubkolbenkältekompressoren daher nicht mit Drehgeschwindigkeiten betrieben, die im Bereich der Eigenfrequenzen des Schwingungssystems liegen.

Um dennoch den Betrieb auch bei niedrigen Drehgeschwindigkeiten ohne die Gefahr störender Geräuschemissionen zu ermöglichen, ist es erfindungsgemäß vorgesehen, dass die elektronische Steuerungseinrichtung 13 dazu eingerichtet ist, dass sie während eines Regelungszeitabschnittes Δt zumindest einmal pro Kurbelwellenumdrehung kurbelwinkelabhängig das Betriebsdrehmoment Bm aktiv variiert, indem sie die Spannungsversorgung der Antriebseinheit 18 während eines Antriebswinkelabschnittes ΔΦ gegenüber der restlichen Kurbelwellenumdrehung erhöht.

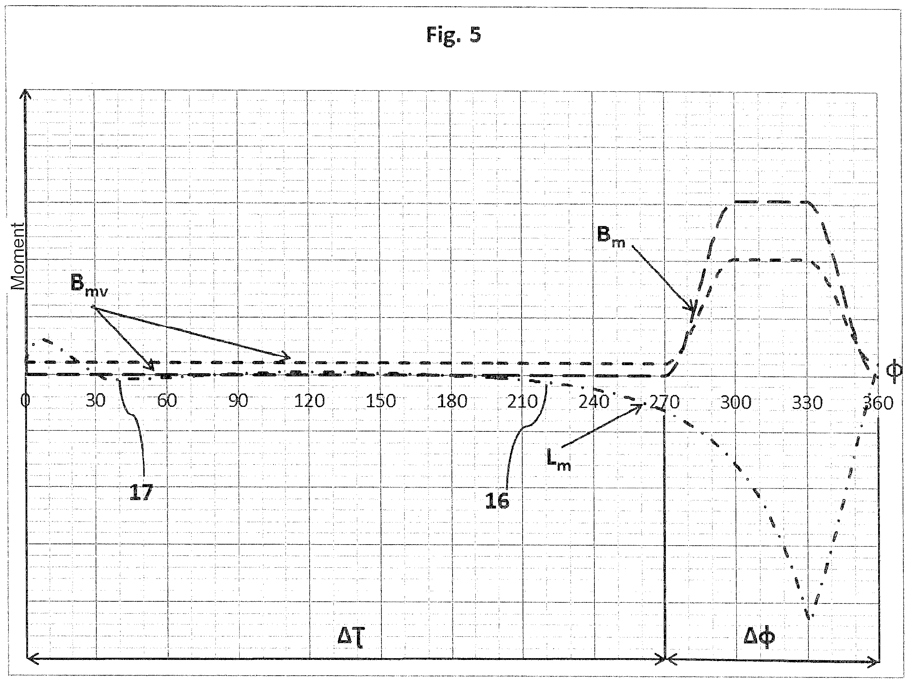

Fig.5 zeigt den aus Fig.3 bekannten Verlauf des Lastmomentes Lm während einer Kurbelwellenumdrehung, jedoch mit von der elektronischen Steuerungseinrichtung 13 erfindungsgemäß angelegtem, schematisch dargestellten Betriebsdrehmoment Bm, das so geregelt ist, dass genau ein Antriebswinkelabschnitt ΔΦ vorgesehen ist, während welchem die Antriebseinheit 18 den Kompressionsmechanismus 5 mit einem positiven Betriebsdrehmoment Bm antreibt und genau ein Laufwinkelabschnitt Δτ während welchem die Antriebseinheit 18 den Kompressionsmechanismus 5 mit einem gegenüber dem positiven Betriebsdrehmoment verringerten positiven Betriebsdrehmoment Bmv antreibt bzw. alternativ dazu gar nicht antreibt (siehe strichlierte Linie des Bmv), wobei die Übergänge zwischen dem positiven Betriebsdrehmoment Bm und dem verringerten Betriebsdrehmoment Bmv zwar eingezeichnet sind, jedoch nicht extra mit einem Bezugszeichen versehen sind sondern der Einfachheit wegen dem positiven Betriebsdrehmoment Bm zugerechnet werden.

Das Verhältnis zwischen positivem Betriebsdrehmoment Bm und verringertem positiven Betriebsdrehmoment Bmv ist in diesem Ausführungsbeispiel bevorzugt >= 1/0,03. Übliche Druckverhältnisse in Hubkolbenkältemittelkompressoren lassen jedoch auch Verhältnisse von >= 1/0,1 bzw. >= 1/0,2 zu, ohne vom Erfindungsgedanken abzuweichen.

In Fig.5 ist außerdem der Beginn der Kompressionsphase KP mit dem Bezugszeichen 16 gekennzeichnet und der Beginn der Saugphase mit dem Bezugszeichen 17. Wie sich aus Fig. 5 weiters ergibt, regelt die elektronische Steuerungseinrichtung 13 des Kältemittelkompressors 1 die Antriebseinheit 18 so, dass der Antriebswinkelabschnitt ΔΦ ganz oder größtenteils innerhalb der Kompressionsphase liegt. Abhängig vom (durchschnittlichen) Betrag des positiven Betriebsdrehmomentes Bm und damit von der Leistungsfähigkeit der Antriebseinheit 18 kann der Antriebswinkelabschnitt ΔΦ größer oder kleiner als im Ausführungsbeispiel dargestellt, vorgesehen sein.

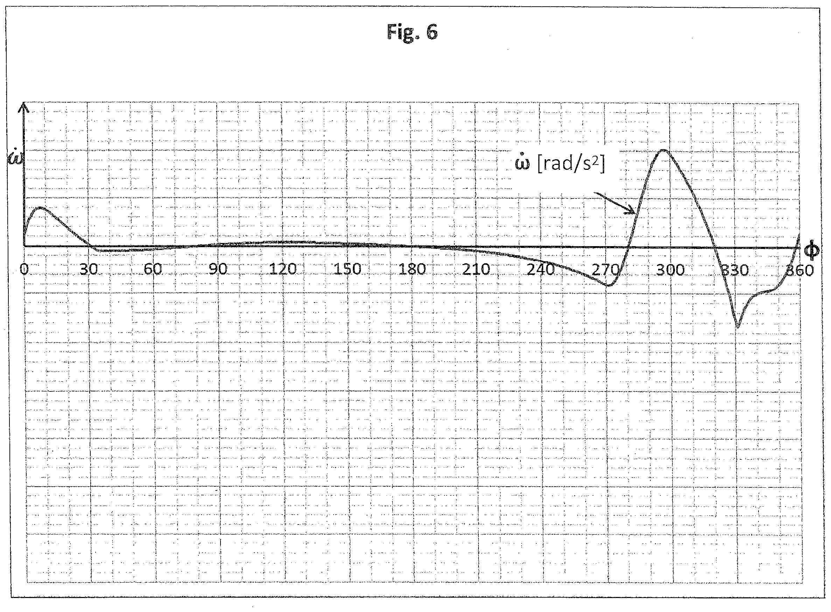

Wie sich aus Fig.6 ergibt, welche ein Diagramm betreffend die Winkelbeschleunigung *ω̇* der Kurbelwelle 6 über dem Kurbelwinkel Φ bei Einsatz einer erfindungsgemäßen elektronischen Steuerungseinrichtung 13 des erfindungsgemäßen Steuerungssystems mit einem Betriebsdrehmomentverlauf gemäß Fig.5 zeigt, führt dieses sowohl über einen definierten Kurbelwinkel aufgebrachte als auch betragsmäßig gesteuerte Antreiben des Kompressionsmechanismus 5 während einer Kurbelwellenumdrehung mit zwei unterschiedlichen Betriebsdrehmomenten Bm und Bmv dazu, dass die Winkelbeschleunigung *ω̇* der Kurbelwelle 6 über dem Kurbelwinkel Φ (und damit auch die Drehzahl über dem Kurbelwinkel) wesentlich ausgeglichener verläuft als dies bei herkömmlichen Hubkolbenkältemittelkompressoren nach dem Stand der Technik der Fall ist und in Fig.4 dargestellt ist. So ist im vorliegenden Ausführungsbeispiel die Drehzahl im Kurbelwinkelbereich zwischen 30° und 210° annähernd Konstant, die Kurbelwelle erfährt keine Beschleunigung. Im Bereich des Kurbelwinkels zwischen 210° und 360° wird die Kurbelwelle zunächst beschleunigt und danach allerdings wieder gebremst, so dass die Gleichförmigkeit der Drehzahl der Kurbelwelle dadurch nur unwesentlich beeinflusst wird und damit auch die auf den Kompressionsmechanismus wirkenden Stöße wesentlich geringer ausfallen als dies bisher der Fall war.

In einer weiteren Ausführungsvariante der Erfindung kann es vorgesehen sein, dass der Verlauf des positiven Betriebsdrehmomentes Bm und des verringerten positiven Betriebsdrehmomentes Bmv gemeinsam, mit welchen der Kompressionsmechanismus 5 angetrieben wird, praktisch dem Verlauf des Lastmomentes Lm entspricht, welchem der Kompressionsmechanismus 5 ausgesetzt ist, jedoch mit umgekehrten Vorzeichen und gegebenenfalls abschnittsweise größeren oder geringeren Beträgen, je nachdem ob die Drehgeschwindigkeit des Kompressionsmechanismus konstant gehalten werden soll, erhöht werden soll oder verringert werden soll.

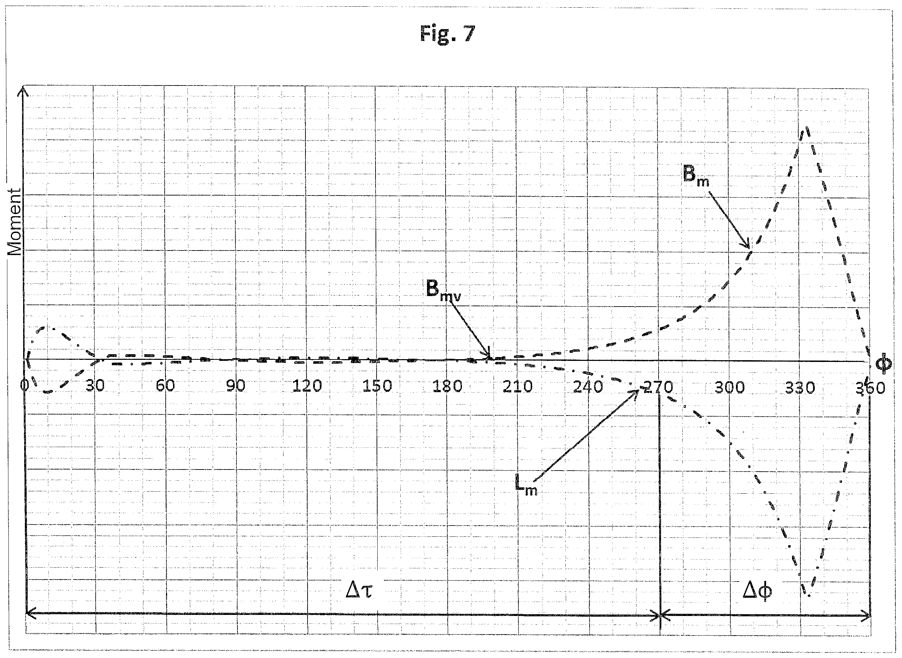

Fig.7 zeigt eine derart abgestimmte Kombination von positivem Betriebsdrehmoment Bm und verringertem positiven Betriebsdrehmoment Bmv. Wie aus dem Diagramm ersichtlich ist, variiert das positive Betriebsdrehmoment Bm sowohl im Antriebswinkelabschnitt ΔΦ als auch im Laufwinkelabschnitt Δτ, so dass der Verlauf des Lastmomentes Lm jedoch mit umgekehrten Vorzeichen nachgebildet wird.

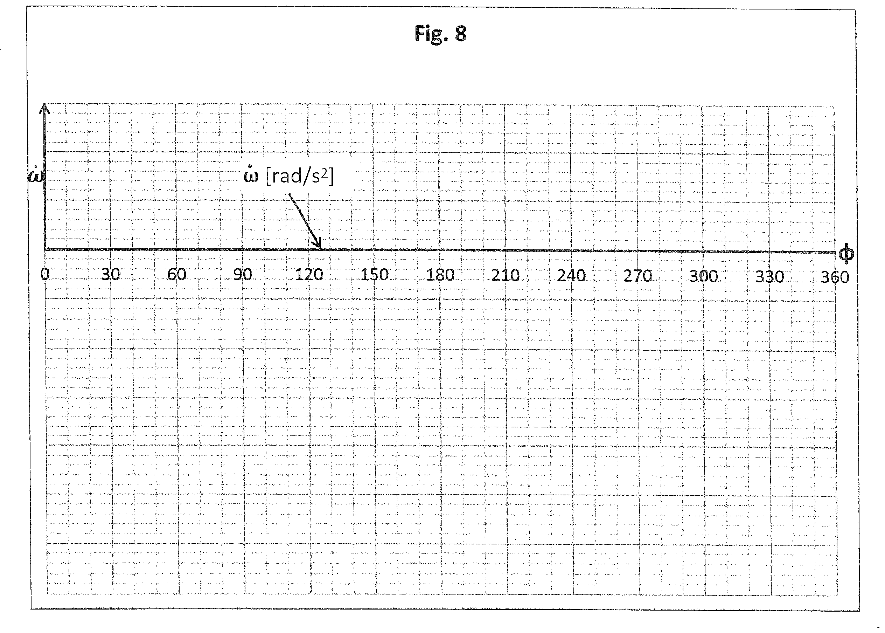

Fig.8 zeigt, dass in diesem Fall die Winkelbeschleunigung *ω̇* der Kurbelwelle 6 konstant ist, wodurch sich eine konstante Drehzahl über den Kurbelwinkel Φ und damit auch eine konstante Drehgeschwindigkeit ergibt.

Ein weiterer Vorteil der erfindungsgemäßen elektronischen Steuerungseinrichtung 13 des erfindungsgemäßen Steuerungssystems ist es aber auch, den Anhalteprozess eines Hubkolbenkältemittelkompressors 1 optimieren zu können indem dieser
- entweder bis zum völligen Stillstand aktiv heruntergefahren werden kann, ohne den Kompressionsmechanismus 5 aktiv abbremsen zu müssen und ohne dass es zu einer Drehung des Kompressionsmechanismus 5 in die entgegengesetzte Richtung kommt oder
- bis knapp vor Stillstand aktiv heruntergefahren werden kann, jedenfalls aber bis Drehzahlen unterhalb von 450 U/min, vorzugsweise unterhalb von 250 U/min, wo die Antriebseinheit 18 problemlos abgeschaltet werden kann, da ein Zurückschlagen des Kolbens, wenn dies überhaupt noch erfolgt, bei diesen niedrigen Drehzahlen keinerlei negative lärmtechnische Auswirkungen mehr hat.

Dabei wird der Verlauf des positiven Betriebsdrehmomentes Bm und des verringerten positiven Betriebsdrehmomentes Bmv nicht so auf den Verlauf des Lastmomentes Lm abgestimmt, dass der erste Verlauf praktisch einem gespiegelten Lastmoment Lm entspricht (siehe Fig.7 und 8) denn dies führt, zu einer konstanten Drehzahl und konstanten Drehgeschwindigkeit insgesamt.

Während des Anhalteprozesses soll aber die Drehgeschwindigkeit unabhängig von der Schwankung der Drehzahl über dem Kurbelwinkel Φ verlangsamt werden, so dass die elektronische Steuerungseinrichtung 13 das Betriebsdrehmoment Bm und das verringerte positive Betriebsdrehmoment Bmv so ausübt, dass die vom Lastmoment Lm während der Kompressionsphase auftretenden Stöße auf den Kompressionsmechanismus größtenteils dissipiert werden, die Drehgeschwindigkeit insgesamt aber abnimmt.
Gleichzeitig kann das positive Betriebsdrehmoment Bm so gewählt werden, dass jedenfalls in der Kompressionsphase stets ausreichend Antrieb vorhanden ist, um ein Zurückschlagen des Kolbens 9 zu verhindern.

Dabei kann es, entgegen den dargestellten Ausführungsbeispielen auch vorgesehen sein, dass der Antriebswinkelabschnitt ΔΦ bereits in der Saugphase des Kolbens 9 beginnt, so dass der Kolben 9 bereits vor Eintritt in die Kompressionsphase mit ausreichend Schwung versorgt wird, um den folgenden oberen Totpunkt jedenfalls zu überwinden, ohne vom Lastmoment Lm zurückgeschlagen zu werden.

Durch entsprechende betragsmäßige Abstimmung des positiven Betriebsdrehmomentes Bm und des verringerten positiven Betriebsdrehmomentes Bmv aufeinander kann der Kompressionsmechanismus 5 seine Drehbewegung insgesamt bis zum vollkommenen Stillstand bzw. bis zu einem Zeitpunkt verlangsamen, zu welchem ein mögliches Zurückschlagen des Kolbens 9 keinerlei negative lärmtechnische Auswirkungen mehr hat.

Wesentlich dabei ist, dass die elektronische Steuerungseinrichtung 13 auch im Zuge der Reduktion der Drehgeschwindigkeit für die Zwecke des Vorbereitens des Abschaltens der Antriebseinheit 18 in der Lage ist, zumindest einen derartigen Antriebswinkelabschnitt ΔΦ und zumindest einen derartigen Laufwinkelabschnitt Δτ zumindest während eines mehrere Kurbelwellenumdrehungen andauernden Regelungszeitabschnittes Δt vorzusehen.

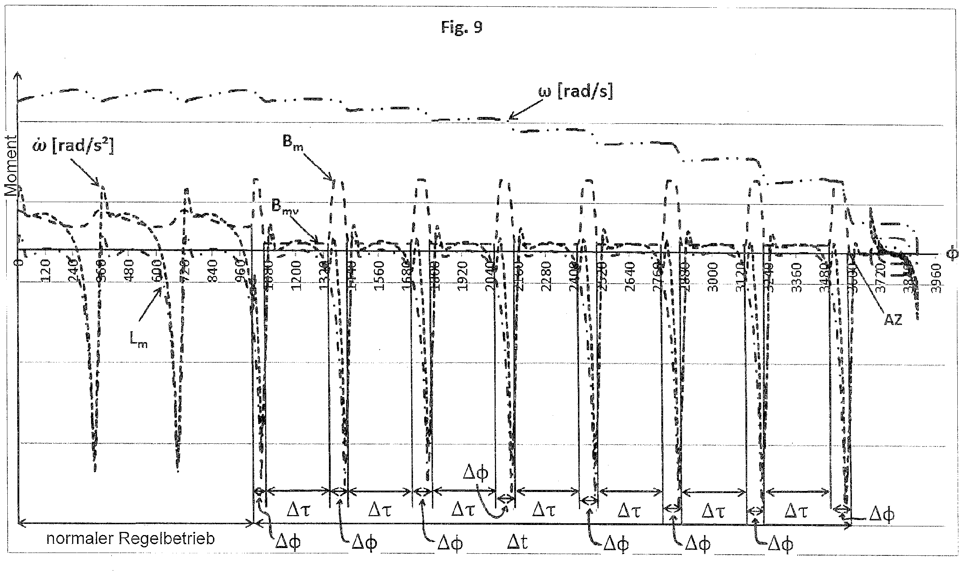

Fig.9 zeigt ein Diagramm betreffend den Verlauf des Lastmomentes Lm, des positiven Betriebsdrehmomentes Bm, des verringerten positiven Betriebsdrehmomentes Bmv, der Drehgeschwindigkeit ω sowie der Winkelbeschleunigung ω des Kompressionsmechanismus 5 über mehrere Kurbelwellenumdrehungen hinweg und über einen Regelungszeitabschnitt Δt wobei die Drehgeschwindigkeit ω kontinuierlich reduziert wird bis der Antrieb zum Abschaltzeitpunkt AZ bei einer Drehgeschwindigkeit unterhalb von 450 U/min, vorzugsweise unterhalb von 250 U/min abgeschaltet wird. Das Abschalten erfolgt dabei bevorzugt während der Kompressionsphase.

Erfindungsgemäß ist es vorgesehen, dass die elektronische Steuereinheit 13 anstelle des im Stand der Technik praktizierten Abschaltens der Antriebseinheit 18 bei relativ hohen Drehgeschwindigkeiten und anschließendem Auslaufenlassen, gegebenenfalls zusätzlichem Aufbringen eines Bremsmomentes, den Kompressionsmechanismus kontinuierlich antreibt und zwar mit einem positiven Betriebsdrehmoment Bm während eines Antriebswinkelabschnittes ΔΦ und einem demgegenüber verringerten positiven Betriebsdrehmomentes Bmv während eines Laufwinkelabschnittes Δτ, wobei das positive Betriebsdrehmoment Bm bei jeder Kurbelwellenumdrehung bis zum Abschaltzeitpunkt AZ bevorzugt betragsmäßig konstant bleibt, gegebenenfalls leicht zunimmt, um den Geschwindigkeitsverlust und damit die Reduktion der kinetischen Energie auszugleichen.

Bevorzugt bleibt das positive Betriebsdrehmoment Bm konstant, wird aber mit abnehmender Drehgeschwindigkeit jedenfalls über eine längere Zeitspanne somit auch während eines zunehmenden Kurbelwinkels aufgebracht.

Dadurch wird der Kompressionsmechanismus stets etwas mehr oder aber auch etwas länger oder aber beides "angetaucht", um das Lastmoment überwinden zu können und die "verlorene" kinetische Energie der Einheit bestehend aus Kompressionsmechanismus 5 und Antriebseinheit 18 zu kompensieren. Das Abschalten der Antriebseinheit 18 erfolgt erst bei einer sehr geringen Drehgeschwindigkeit unterhalb von 450 U/min, vorzugsweise unterhalb von 250 U/min.

Der Regelungszeitabschnitt Δt endet im vorliegenden Ausführungsbeispiel mit dem Abschaltzeitpunkt AZ oder mit anderen Worten ist der Regelungszeitabschnitt Δt dem Abschaltzeitpunkt AZ unmittelbar vorgeschaltet.

Wie aus Fig.9 ersichtlich, findet nach dem Abschaltzeitpunkt AZ ein Zurückschlagen des Kolbens 9 statt, da der Kompressionsmechanismus 5 während des Anhalteprozesses keinem Betriebsdrehmoment mehr ausgesetzt ist und der Kolben 9 in der Kompressionsphase das Lastmoment Lm nicht mehr überwinden kann. In weiterer Folge stellt sich eine Pendelbewegung der Kurbelwelle 6 um den unteren Totpunkt ein, wobei die dabei auftretenden Lastmomente Lm betragsmäßig derart klein sind, dass diese keine Auslenkungen der Federelemente 10 bewirken, welche zu einem Kontakt zwischen der Einheit bestehend aus Kompressionsmechanismus 5 und Antriebseinheit 18 einerseits und Gehäuse 11 andererseits führen.

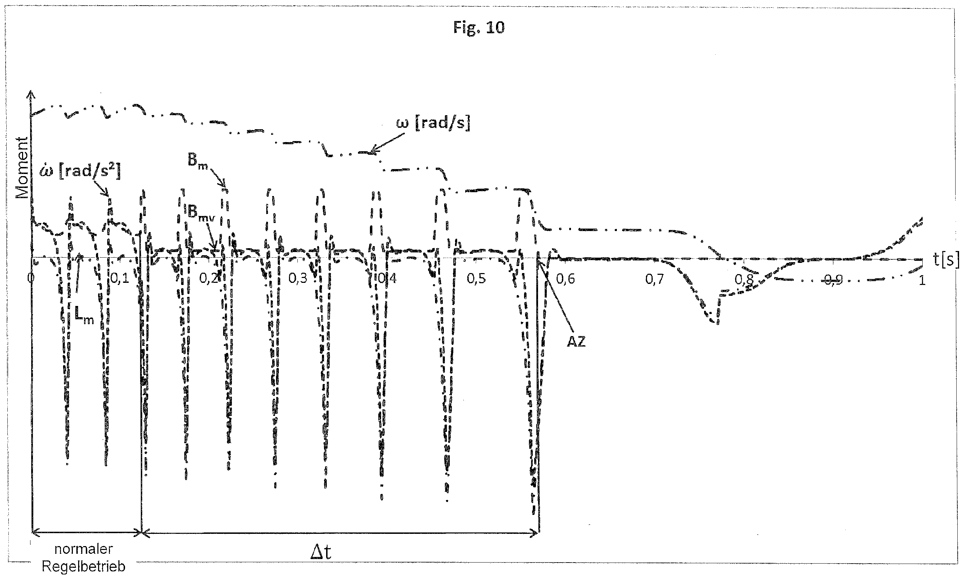

Fig.10 entspricht Fig.9 jedoch mit dem Unterschied, dass als Abszisse nicht der Kurbelwinkel Φ aufgetragen ist sondern die Zeit t. Man erkennt, dass mit abnehmender Drehgeschwindigkeit ω, die Zeitdauer, über welche das positive Betriebsdrehmoment Bm aufgetragen wird, zunimmt.

Eine Umkehr der Drehgeschwindigkeit findet bei ca. t=0,78 statt, was dem Zurückschlagen des Kolbens 9 entspricht. Das aus Fig.9 ersichtliche Pendeln um den unteren Totpunkt und das damit verbundene ständige Wechseln der Drehgeschwindigkeit ω zwischen einem positiven und negativen Wert ist in Fig.10 nicht mehr dargestellt.

### BEZUGSZEICHENLISTE

- 1: Hubkolbenkältemittelkompressor
- 2: Kondensator
- 3: Drosselvorrichtung
- 4: Verdampfer
- 5: Kompressionsmechanismus
- 6: Kurbelwelle
- 7: Pleuel
- 8: Zylinderblock
- 9: Kolben
- 10: Federelemente
- 11: Gehäuse
- 12: Stromversorgung
- 13: elektronische Steuerungseinrichtung des Kältemittelkompressors
- 14: elektronische Steuerungseinrichtung des Kühlschranks
- 15: Kühlschrank
- 16: Beginn der Kompressionsphase
- 17: Beginn der Saugphase
- 18: Antriebseinheit

## Patentansprüche

1. Steuerungssystem umfassend einen Kältemittelkompressor und eine elektronische Steuerungseinrichtung für den Kältemittelkompressor, welcher Kältemittelkompressor zumindest umfasst
- eine Antriebseinheit (18),
- einen mit der Antriebseinheit (18) in Wirkverbindung stehenden Kompressionsmechanismus (5), mit zumindest einem sich in einem Zylinder eines Zylinderblocks (8) zwischen einem unteren und einem oberen Totpunkt hin und her bewegenden, über eine Kurbelwelle (6) angetriebenen Kolben (9),
wobei die elektronische Steuerungseinrichtung (13), dazu eingerichtet ist,
- die Drehgeschwindigkeit (ω) der Antriebseinheit (18) zu erfassen und zu steuern und/oder regeln,
- die Kolbenposition zumindest annähernd zu erfassen
**dadurch gekennzeichnet, dass**
die elektronische Steuerungseinrichtung (13) dazu eingerichtet ist,den Kompressionsmechanismus (5) über die Antriebseinheit (18) derart anzutreiben, dass, für die Dauer eines mehr als eine Kurbelwellenumdrehung aufweisenden Regelungszeitabschnittes (Δt), bei mehreren Kurbelwellenumdrehungen, vorzugsweise bei jeder Kurbelwellenumdrehung des Regelungszeitabschnittes (Δt), zumindest ein Antriebswinkelabschnitt (ΔΦ) und zumindest ein Laufwinkelabschnitt (Δτ) vorgesehen ist und wobei der Kompressionsmechanismus (5) während des mindestens einen Antriebswinkelabschnittes (ΔΦ) einem positiven Betriebsdrehmoment (Bm) und während des zumindest einen Laufwinkelabschnittes (Δτ) einem gegenüber dem positiven Betriebsdrehmoment (Bm) verringerten positiven Betriebsdrehmoment (Bmv) oder keinem positiven Betriebsdrehmoment (Bm) ausgesetzt ist.

2. Steuerungssystem nach Anspruch 1, **dadurch gekennzeichnet, dass** das Verhältnis zwischen positivem Betriebsdrehmoment (Bm) und verringertem positiven Betriebsdrehmoment (Bmv) >= 1/0,2, vorzugsweise >= 1/0,1 besonders bevorzugt >= 1/0,03 ist.

3. Steuerungssystem nach Anspruch 1 oder 2, **dadurch gekennzeichnet, dass** sie dazu eingerichtet ist, während einer Kurbelwellenumdrehung mehrere Antriebswinkelabschnitte (ΔΦₙ) und mehrere Laufwinkelabschnitte (Aτₙ) abwechselnd vorzusehen.

4. Steuerungssystem nach einem der vorhergehenden Ansprüche, **dadurch gekennzeichnet, dass** die elektronische Steuerungseinrichtung (13) dazu eingerichtet ist, den oder die Antriebswinkelabschnitte (ΔΦ,ΔΦₙ) mit positivem Betriebsdrehmoment (Bm) vorzusehen, wenn der Kolben (9) sich zwischen einem unteren und einem oberen Totpunkt in einer Kompressionsphase befindet.

5. Steuerungssystem nach Anspruch 4, **dadurch gekennzeichnet, dass** die elektronische Steuerungseinrichtung (13) dazu eingerichtet ist, während einer vollständigen Kurbelwellenumdrehung genau einen Antriebswinkelabschnitt (ΔΦ) und einen Laufwinkelabschnitt (Δτ) vorzusehen, wobei der genau eine Antriebswinkelabschnitt (ΔΦ) vorzugsweise während eines Kurbelwinkels von 220° bis 360° vorgesehen ist, besonders bevorzugt während eines Kurbelwinkels von 270° bis 360°.

6. Steuerungssystem nach einem der vorhergehenden Ansprüche, **dadurch gekennzeichnet, dass** die elektronische Steuerungseinrichtung (13) dazu eingerichtet ist, den oder die Laufwinkelabschnitte (Δτ,Δτₙ) mit verringertem positiven Betriebsdrehmoment (Bmv) bzw. ohne positivem Betriebsdrehmoment vorzusehen, wenn der Kolben (9) sich zwischen einem oberen und einem unteren Totpunkt in einer Saugphase befindet.

7. Steuerungssystem nach einem der vorhergehenden Ansprüche, **dadurch gekennzeichnet, dass** die elektronische Steuerungseinrichtung (13) dazu eingerichtet ist, während des/der Laufwinkelabschnitte (Δτ,Δτₙ) ein Bremsmoment an den Kompressionsmechanismus (5) anzulegen.

8. Steuerungssystem nach einem der vorhergehenden Ansprüche, **dadurch gekennzeichnet, dass** die elektronische Steuerungseinrichtung (13) dazu eingerichtet ist, die Drehgeschwindigkeit (ω) der Antriebseinheit (18) während des Regelungszeitabschnittes (Δt) zu reduzieren oder zu erhöhen.

9. Steuerungssystem nach einem der vorhergehenden Ansprüche, **dadurch gekennzeichnet, dass** die elektronische Steuerungseinrichtung (13) dazu eingerichtet ist, das positive Betriebsdrehmoment (Bm) während des mindestens einen Antriebswinkelabschnittes (ΔΦ) und/oder das verringerte positive Betriebsdrehmoment (Bmv) während des mindestens einen Laufwinkelabschnittes (Δτ) jeweils mit variierendem Betrag auszubilden.

10. Steuerungssystem nach Anspruch 9, **dadurch gekennzeichnet, dass** die elektronische Steuerungseinrichtung (13) dazu eingerichtet ist, den gemeinsamen Verlauf des positiven Betriebsdrehmomentes (Bm) und des verringerten positiven Betriebsdrehmomentes (Bmv) je Kurbelwellenumdrehung so auszubilden, dass es dem auf den Kompressionsmechanismus (5) wirkenden Lastmoment (Lm) während dieser Kurbelwellenumdrehung entspricht.

11. Steuerungssystem nach Anspruch 10, **dadurch gekennzeichnet, dass** ein Beschleunigungssensor an der Antriebseinheit (18) und oder einer Drucksensor im Zylinder des Zylinderblocks (8) vorgesehen ist.

12. Verfahren zum Regeln eines Hubkolbenkältemittelkompressors (1), dessen Kompressionsmechanismus (5) über eine Antriebseinheit (18) mit einem Betriebsdrehmoment angetrieben wird, **dadurch gekennzeichnet, dass** es die folgenden Schritte
- während eines mehr als eine Kurbelwellenumdrehung aufweisenden Regelungszeitabschnittes (Δt)
- bei mehreren, vorzugsweise bei allen Kurbelwellenumdrehungen des Regelungszeitabschnittes (Δt),
jeweils umfasst:
- detektieren der Position der Kurbelwelle (6) oder des Kolbens (9) des Hubkolbenkältemittelkompressors (1)
- vergleichen der detektierten Position mit zumindest einer vorgegebenen Referenzposition
- ab der zumindest einen vorgegebenen Referenzposition, antreiben des Kompressionsmechanismus (5) mit einem positiven Betriebsdrehmoment (Bm) für die Dauer zumindest eines Antriebswinkelabschnittes (ΔΦ) einer Kurbelwellenumdrehung
- antreiben des Kompressionsmechanismus (5) mit einem gegenüber dem positiven Betriebsdrehmoment (Bm) verringerten positiven Betriebsdrehmoment (Bmv) oder keinem positiven Betriebsdrehmoment für die Dauer zumindest eines Laufwinkelabschnittes (Δτ).

13. Verfahren nach Anspruch 12, **dadurch gekennzeichnet, dass** das Verhältnis zwischen positivem Betriebsdrehmoment (Bm) und verringertem positiven Betriebsdrehmoment (Bmv) >= 1/0,2, vorzugsweise >= 1/0,1 besonders bevorzugt >= 1/0,03 ist.

14. Verfahren nach einem der Ansprüche 12 oder 13, **dadurch gekennzeichnet, dass** während einer Kurbelwellenumdrehung mehrere Referenzpositionen vorgesehen sind.

15. Verfahren nach einem der Ansprüche 12 oder 13, **dadurch gekennzeichnet, dass** während einer Kurbelwellenumdrehung genau ein Antriebswinkelabschnitt (ΔΦ) und ein Laufwinkelabschnitt (Δτ) vorgesehen sind.

16. Verfahren nach einem der Ansprüche 13 bis 15, **dadurch gekennzeichnet, dass** die zumindest eine Referenzposition während eines Kurbelwinkels von 220° bis 360° vorgesehen ist, besonders bevorzugt während eines Kurbelwinkels von 270° bis 360°.

17. Verfahren nach einem der Ansprüche 13 bis 16, **dadurch gekennzeichnet, dass** die Drehgeschwindigkeit des Hubkolbenkältemittelkompressors (1) während des Regelungszeitabschnittes (Δt) reduziert oder erhöht wird.

## Claims

1. A control system comprising a refrigerant compressor and an electronic control unit for the refrigerant compressor, which refrigerant compressor at least comprises
- a drive unit (18),
- a compression mechanism (5) operationally connected to the drive unit (18), having at least one piston (9) moving back-and-forth in a cylinder of a cylinder block (8) between a bottom and a top dead center, which at least one piston (9) is driven via a crankshaft (6),
wherein the electronic control unit (13) is configured for the purpose of
- detecting and controlling and/or regulating the rotational velocity (ω) of the drive unit (18),
- at least approximately detecting the piston position,
**characterized in that**
the electronic control unit (13) is configured for the purpose of driving the compression mechanism (5) via the drive unit (18) such that, for the duration of a regulating time interval (Δt) comprising more than one crankshaft revolution, at least one drive angle section (ΔΦ) and at least one running angle section (Δτ) is provided during multiple crankshaft revolutions, preferably during each crankshaft revolution of the regulating time interval (Δt), and wherein the compression mechanism is subjected to a positive operating torque (Bm) during the at least one drive angle section (ΔΦ) and is subjected to a reduced positive operating torque (Bmv) in relation to the positive operating torque (Bm) or no positive operating torque (Bm) during the at least one running angle section (Δτ).

2. The control system according to Claim 1, **characterized in that** the ratio between positive operating torque (Bm) and reduced positive operating torque (Bmv) is ≥ 1/0.2, preferably ≥ 1/0.1, particularly preferably ≥ 1/0.03.

3. The control system according to Claim 1 or 2, **characterized in that** the electronic control unit (13) is configured to alternately provide multiple drive angle sections (ΔΦₙ) and multiple running angle sections (Δτₙ) during one crankshaft revolution.

4. The control system according to any one of the preceding claims, **characterized in that** the electronic control unit (13) is configured for the purpose of providing the drive angle section or drive angle sections (ΔΦ, ΔΦₙ) with positive operating torque (Bm) when the piston (9) is located between a bottom and a top dead center in a compression phase.

5. The control system according to Claim 4, **characterized in that** the electronic control unit (13) is configured for the purpose of providing precisely one drive angle section (ΔΦ) and one running angle section (Δτ) during a complete crankshaft revolution, wherein the precisely one drive angle section (ΔΦ) is preferably provided during a crank angle of 220° to 360°, particularly preferably during a crank angle of 270° to 360°.

6. The control system according to any one of the preceding claims, **characterized in that** the electronic control unit (13) is configured for the purpose of providing the running angle section or running angle sections (Δτ, Δτₙ) having reduced positive operating torque (Bmv) or no positive operating torque when the piston (9) is located between a top and a bottom dead center in a suction phase.

7. The control system according to any one of the preceding claims, **characterized in that** the electronic control unit (13) is configured for the purpose of applying a braking torque to the compression mechanism (5) during the running angle section or running angle sections (Δτ, Δτₙ).

8. The control system according to any one of the preceding claims, **characterized in that** the electronic control unit (13) is configured for the purpose of reducing or increasing the rotational velocity (ω) of the drive unit (18) during the regulating time interval (Δt).

9. The control system according to any one of the preceding claims, **characterized in that** the electronic control unit (13) is configured for the purpose of varying an absolute value of the positive operating torque (Bm) during the at least one drive angle section (ΔΦ) and/or of the reduced positive operating torque (Bmv) during the at least one running angle section (Δτ).

10. The control system according to Claim 9, **characterized in that** the electronic control unit (13) is configured for the purpose of forming the joint progression of the positive operating torque (Bm) and the reduced positive operating torque (Bmv) for each crankshaft revolution such that it corresponds to the load torque (Lm) acting on the compression mechanism (5) during this crankshaft revolution.

11. The control system according to Claim 10, **characterized in that** an acceleration sensor is provided on the drive unit (18) and/or a pressure sensor is provided in the cylinder of the cylinder block (8).

12. A method for regulating a reciprocating piston refrigerant compressor (1), the compression mechanism (5) of which is driven via a drive unit (18) using an operating torque, **characterized in that**
- during a regulating time interval (Δt) having more than one crankshaft revolution,
- during multiple, preferably during all crankshaft revolutions of the regulating time interval (Δt) following steps are comprised:
- detecting the position of the crankshaft (6) or the piston (9) of the reciprocating piston refrigerant compressor (1)
- comparing the detected position to at least one predefined reference position
- from the at least one predefined reference position, driving the compression mechanism (5) using a positive operating torque (Bm) for the duration of at least one drive angle section (ΔΦ) of a crankshaft revolution
- driving the compression mechanism (5) using a reduced positive operating torque (Bmv) in relation to the positive operating torque (Bm) or no positive operating torque for the duration of at least one running angle section (Δτ).

13. The method according to Claim 12, **characterized in that** the ratio between positive operating torque (Bm) and reduced positive operating torque (Bmv) is ≥ 1/0.2, preferably ≥ 1/0.1, particularly preferably ≥ 1/0.03.

14. The method according to any one of Claims 12 or 13, **characterized in that** multiple reference positions are provided during one crankshaft revolution.

15. The method according to any one of Claims 12 or 13, **characterized in that** precisely one drive angle section (ΔΦ) and one running angle section (Δτ) are provided during one crankshaft revolution.

16. The method according to any one of Claims 13 to 15, **characterized in that** the at least one reference position is provided during a crank angle of 220° to 360°, particularly preferably during a crank angle of 270° to 360°.

17. The method according to any one of Claims 13 to 16, **characterized in that** the rotational velocity of the reciprocating piston refrigerant compressor (1) is reduced or increased during the regulating time interval (Δt).

## Revendications

1. Système de commande comprenant un compresseur à réfrigérant et une installation de commande électronique pour le compresseur à réfrigérant, lequel compresseur à réfrigérant comprend au moins
- une unité d'entraînement (18),
- un mécanisme de compression (5) en liaison active avec l'unité d'entraînement (18), muni d'au moins un piston (9) mobile en va-et-vient dans un cylindre d'un bloc-cylindre (8) entre un point mort bas et un point mort haut et entraîné par un vilebrequin (6),
dans lequel l'installation de commande électronique (13) est configurée pour
- détecter et commander et/ou réguler la vitesse de rotation (ω) de l'unité d'entraînement (18),
- détecter au moins approximativement la position du piston,
**caractérisé en ce que** l'installation de commande électronique (13) est configurée pour entraîner le mécanisme de compression (5) par l'intermédiaire de l'unité d'entraînement (18) de telle manière que, pendant la durée d'un intervalle de temps de régulation (Δt) incluant plus d'un tour complet du vilebrequin, sur plusieurs tours complets du vilebrequin, de préférence à chaque tour complet du vilebrequin dans l'intervalle de temps de régulation (Δt), il est prévu au moins une section d'angle d'entraînement Δ(φ) et au moins une section d'angle de marche (Δτ), le mécanisme de compression (5) étant exposé, pendant l'au moins une section d'angle d'entraînement (Δφ), à un couple de service positif (Bm) et, pendant l'au moins une section d'angle de marche (Δτ), à un couple de service positif réduit (Bmv) par rapport au couple de service positif (Bm) ou à aucun couple de service positif (Bm).

2. Système de commande selon la revendication 1, **caractérisé en ce que** le rapport entre le couple de service positif (Bm) et le couple de service positif réduit (Bmv) est ≥ 1/0,2, de préférence ≥ 1/0,1, en particulier ≥ 1/0,03.

3. Système de commande selon la revendication 1 ou 2, **caractérisé en ce que** l'installation de commande électronique (13) est configuré pour prévoir alternativement plusieurs sections d'angle d'entraînement (Δφₙ) et plusieurs sections d'angle de marche (Aτₙ) pendant un tour complet du vilebrequin.

4. Système de commande selon l'une des revendications précédentes, **caractérisé en ce que** l'installation de commande électronique (13) est configurée pour prévoir la ou les sections d'angle d'entraînement (Δφ, Δφₙ) au couple de service positif (Bm) quand le piston (9) se trouve dans une phase de compression entre un point mort bas et un point mort haut.

5. Système de commande selon la revendication 4, **caractérisé en ce que** l'installation de commande électronique (13) est configurée pour prévoir, pendant un tour complet du vilebrequin, exactement une section d'angle d'entraînement (Δφ) et une section d'angle de marche (Δτ), l'exactement une section d'angle d'entraînement (Δφ) étant prévue de préférence pendant un angle de vilebrequin de 220° à 360°, en particulier pendant un angle de vilebrequin de 270° à 360°.

6. Système de commande selon l'une des revendications précédentes, **caractérisé en ce que** l'installation de commande électronique (13) est configurée pour prévoir la ou les sections d'angle de marche (Δτ, Δτₙ) au couple de service positif réduit (Bmv) ou sans couple de service positif quand le piston (9) se trouve dans une phase d'aspiration entre un point mort haut et un point mort bas.

7. Système de commande selon l'une des revendications précédentes, **caractérisé en ce que** l'installation de commande électronique (13) est configurée pour exercer un moment de freinage sur le mécanisme de compression (5) pendant la ou les sections d'angle de marche (Δτ, Δτₙ).

8. Système de commande selon l'une des revendications précédentes, **caractérisé en ce que** l'installation de commande électronique (13) est configurée pour réduire ou augmenter la vitesse de rotation (ω) de l'unité d'entraînement (18) pendant l'intervalle de temps de régulation (Δt).

9. Système de commande selon l'une des revendications précédentes, **caractérisé en ce que** l'installation de commande électronique (13) est configurée pour constituer le couple de service positif (Bm) pendant l'au moins une section d'angle d'entraînement (Δφ) et/ou le couple de service positif réduit (Bmv) pendant l'au moins une section d'angle de marche (Δτ) avec une grandeur variable à chaque fois.

10. Système de commande selon la revendication 9, **caractérisé en ce que** l'installation de commande électronique (13) est configurée pour constituer la courbe commune du couple de service positif (Bm) et du couple de service positif réduit (Bmv) à chaque tour complet du vilebrequin de telle façon qu'elle corresponde au moment de charge (Lm) agissant sur le mécanisme de compression (5) pendant ce tour complet du vilebrequin.

11. Système de commande selon la revendication 10, **caractérisé en ce qu'**un capteur d'accélération est prévu sur l'unité d'entraînement (18) et/ou un capteur de pression dans le cylindre du bloc-cylindre (8).

12. Procédé pour la régulation d'un compresseur de réfrigérant à piston alternatif (1) dont le mécanisme de compression (5) est entraîné par une unité d'entraînement (18) à un couple de service, **caractérisé en ce que**
- pendant un intervalle de temps de régulation (Δt) incluant plus d'un tour complet du vilebrequin,
- lors de plusieurs, de préférence de tous, les tours complets du vilebrequin de l'intervalle de temps de régulation (Δt),
il comprend les étapes suivantes :
- détection de la position du vilebrequin (6) ou du piston (9) du compresseur à réfrigérant à piston alternatif (1) ;
- comparaison de la position détectée avec au moins une position de référence prédéfinie ;
- à partir de l'au moins une position de référence prédéfinie, entraînement du mécanisme de compression (5) à un couple de service positif (Bm) pendant la durée d'au moins une section d'angle d'entraînement (Δφ) d'un tour complet du vilebrequin ;
- entraînement du mécanisme de compression (5) à un couple de service positif réduit (Bmv) par rapport au couple de service positif (Bm) ou sans couple de service positif pendant la durée d'au moins une section d'angle de marche (Δτ).

13. Procédé selon la revendication 12, **caractérisé en ce que** le rapport entre le couple de service positif (Bm) et le couple de service positif réduit (Bmv) est ≥ 1/0,2, de préférence ≥ 1/0,1, en particulier ≥ 1/0,03.

14. Procédé selon l'une des revendications 12 ou 13, **caractérisé en ce que** plusieurs positions de référence sont prévues pendant un tour complet du vilebrequin.

15. Procédé selon l'une des revendications 12 ou 13, **caractérisé en ce qu'**exactement une section d'angle d'entraînement (Δφ) et une section d'angle de marche (Δτ) sont prévues pendant un tour complet du vilebrequin.

16. Procédé selon l'une des revendications 13 à 15, **caractérisé en ce que** l'au moins une position de référence est prévue pendant un angle de vilebrequin de 220° à 360°, en particulier pendant un angle de vilebrequin de 270° à 360°.

17. Procédé selon l'une des revendications 13 à 16, **caractérisé en ce que** la vitesse de rotation du compresseur à réfrigérant à piston alternatif (1) est réduite ou augmentée pendant l'intervalle de temps de régulation (Δτ).
